# EUROPEAN PATENT SPECIFICATION

(11) **EP 3 643 612 B1**
(45) Date of publication and mention of the grant of the patent: **12.07.2023**
(21) Application number: 19205427.8
(22) Date of filing: 25.10.2019
(51) Int. Cl.: B64D 11/02, B60R 15/02, B60R 15/04, B61D 35/00

(54) **IMPROVED LAVATORY MONUMENT FOR AIRCRAFT**
VERBESSERTES TOILETTENABTEIL FÜR FLUGZEUGE
STRUCTURE DE TOILETTES AMÉLIORÉE POUR AÉRONEF

(30) Priority: 26.10.2018 US 201816172327
(43) Date of publication of application: 29.04.2020
(73) Proprietor: The Boeing Company, Arlington, VA 22202 (US)
(72) Inventor: YOUNG, Stephen M., Chicago, IL 60606-1596 (US); SWANSON, Kevin Griffith, Chicago, IL 60606-1596 (US)
(74) Representative: Howson, Richard Giles Bentham

(56) References cited:
- WO-A1-2016/162918
- US-A1- 2014 196 206
- US-A1- 2018 118 347
- US-B2- 7 520 223

## Description

### BACKGROUND INFORMATION

### 1. Field:

The present disclosure relates to aircraft and, more particularly, to aircraft modular lavatory monuments having replaceable fixtures.

### 2. Background:

U.S. Patent Application No. 16/172429, entitled "Improved Aft Wall for a Lavatory Monument of an Aircraft", describes:
An aircraft comprises a fuselage and an aft wall of a lavatory monument within the fuselage and extending radially inwardly relative to the fuselage. The aft wall is removably connected to an outboard wall, a ceiling, and a floor of the lavatory monument.

U.S. Patent Application No. 16/172247, entitled "Modular Faucet System for Aircraft", describes:
A modular faucet system for an aircraft comprising a faucet outlet, a flow valve, and an actuator. The faucet outlet is configured to be installed on the aircraft. The flow valve is configured to be installed on the aircraft separately from the faucet outlet, to be connected by a first water line to a water supply comprising a water tank on the aircraft, and to be connected by a second water line to the faucet outlet. The actuator is configured to be installed on the aircraft separately from the faucet outlet and the flow valve. The actuator comprises a touchless sensor that is configured to detect a user of the modular faucet system. The actuator is configured to generate a control signal to open the flow valve to provide water from the water supply to the faucet outlet in response to detection of the user by the touchless sensor.

Aircraft are subject to strict regulatory compliance standards in nearly every country in the world. In the United States, the Federal Aviation Administration governs the standards for manufacturing, maintaining, and operating aircraft and ancillary concerns such as operating airports. The Federal Aviation Regulations (FARs) are organized into sections known as parts due to the organization within the Code of Federal Regulations. There are dozens of parts divided into tens of thousands of separate sections, many of which have large numbers of researchers and technicians using them at any given time. In all, there are many thousands of pages of regulations that must be observed across the aircraft industry.

Of the FARs, part 21 deals with certification procedures for products and parts. These FARs also interact with other regulations, such as but not limited to parts 23-39 (dealing with airworthiness standards for different types of aircraft), part 43 (maintenance), part 119 (certification of carriers), part 121 (operating requirements), part 125 (large passenger aircraft), and others.

Because of these extensive regulations, a technician or engineer cannot simply replace a part with something he or she sees in non-aircraft markets. Instead, new or replacement parts must either be pre-approved per regulations, or approval must be obtained from the Federal Aviation Administration (or other regulatory body in countries other than the United States) in order to use new or different parts.

For example, aircraft lavatories, like any other parts of the aircraft, are subject to strict regulatory requirements. A great many design features are required, right down to the height at which fluid lines are placed in the lavatory. Because of these regulations, aircraft lavatories for commercial aircraft have traditionally been constructed as whole units, known as "monuments". More generally, a "monument" is a large, replaceable section of an inside of the aircraft designed for a
purpose, such as but not limited to a lavatory. The monument design scheme allows, for example, a lavatory for a commercial aircraft to be approved by regulators as a whole and then installed in an aircraft.

However, this regulatory and design scheme results in a problem: if even a single component of the inside of the lavatory requires replacement, such as if a merely decorative flaw were to appear in a backsplash, then the entire lavatory monument (walls, floor, toilet, sink, everything) has to be removed and a new lavatory monument installed. It is not possible to simply remove and replace the backsplash. This problem is not easily solved because the heavy regulatory environment leads engineers to design entire lavatory monuments to meet regulatory requirements. To date, no solution to this problem has been presented. Instead, carriers and manufacturers have had to bear the cost of replacing entire lavatory monuments for even minor adjustments or corrections to a lavatory.

WO 2016/162918 A1, in accordance with its abstract, states an aeroplane lavatory unit is provided in which a ceiling part, a floor part, and side wall parts are separately formed, and which is formed by assembling these parts. The side wall parts are formed from a plurality of wall modules. The plurality of wall modules are coupled to form an enclosed space therein.

US 7,520,223 B2, in accordance with its abstract, states a container such as a standard aircraft unit load device, a truck trailer, a ship's cargo compartment, or the like, is fitted with a blast mitigating material located within the container. The blast mitigating material can be fitted to the container during manufacture, or an existing container can be retrofitted.

US 2014/0196206 A1, in accordance with its abstract, states a modular lavatory monument assembly configured to be positioned in the interior of a aircraft. The modular lavatory monument assembly includes first, second, third, and fourth walls that cooperate to form an outer shell that defines a lavatory interior. The fourth wall includes an alcove extending outwardly therefrom. The assembly also includes a sink module positioned in the alcove, a mirror module positioned above the sink module in the alcove, and a door positioned on one of the second or third walls.

### SUMMARY

In a first aspect there is provided an aircraft as defined in claim 1. In a second aspect there is provided a method as defined in claim 14.

An aircraft disclosed herein includes a fuselage and a lavatory monument removably mounted inside the fuselage. The lavatory monument includes an outboard wall removably connected to an inside surface of the fuselage. The lavatory monument also includes a ballistic intrusion barrier removably connected to the outboard wall and extending radially inwardly relative to the fuselage. The lavatory monument also includes a floor panel connected to and between the outboard wall and the ballistic intrusion barrier. The lavatory monument also includes a toilet connected to the floor panel. The lavatory monument also includes a plurality of lavatory fixtures individually removably attached to at least one of: the outboard wall, the ballistic intrusion barrier, the floor panel, or the toilet. Each of the plurality of lavatory fixtures is configured to be individually removable. Common interface points on each of the plurality of lavatory fixtures are unchangeable with respect to the lavatory monument.

Also disclosed is a method of modifying the above aircraft. The method includes removing the fixture while retaining the lavatory monument in place; and replacing the fixture.

### BRIEF DESCRIPTION OF THE DRAWINGS

Illustrative examples of the present disclosure, as well as a preferred mode of use, further objectives and features thereof, will best be understood by reference to the following detailed description of the present disclosure when read in conjunction with the accompanying drawings, wherein:
**Figure** 1 is an illustration of an exploded view of an aircraft modular lavatory monument in accordance with an example;
**Figure 2A** through **Figure 2E** are illustrations of portions and options of an upper cabinet of an aircraft modular lavatory monument in accordance with an example;
**Figure 3A** through **Figure 3C** are illustrations of backsplash options for an aircraft modular lavatory monument in accordance with an example;
**Figure 4A** through **Figure 4E** are illustrations of sink and counter top options for an aircraft modular lavatory monument in accordance with an example;
**Figure 5A** and **Figure 5B** are illustrations of sink and countertop options for an aircraft modular lavatory monument in accordance with an example;
**Figure 6A** through **Figure 6C** are illustrations of lower storage and wall options for an aircraft modular lavatory monument in accordance with an example;
**Figure 7A** and **Figure 7B** are illustrations of outboard wall and ceiling options for an aircraft modular lavatory monument in accordance with an example;
**Figure 8A** through **Figure 8C** are illustrations of aft wall options for an aircraft modular lavatory monument in accordance with an example;
**Figure 9A** and **Figure 9B** are illustrations of toilet shroud options for an aircraft modular lavatory monument in accordance with an example;
**Figure 10A** through **Figure 10D** are illustrations of toilet shroud options for an aircraft modular lavatory monument in accordance with an example;
**Figure 11A** through **Figure 11D** are illustrations of door options for an aircraft modular lavatory monument in accordance with an example;
**Figure 12A** and **Figure 12B** are illustrations of ballistic intrusion barrier options for an aircraft modular lavatory monument in accordance with an example;
**Figure 13** is an illustration of a block diagram of a lighting system for an aircraft modular lavatory monument in accordance with an example;
**Figure 14** is an illustration of an arrangement of lights for a lighting system for an aircraft modular lavatory monument in accordance with an example;
**Figure 15** is an illustration of a block diagram of a water system for an aircraft modular lavatory monument in accordance with an example;
**Figure 16** is an illustration of a block diagram for a control system for an aircraft modular lavatory monument in accordance with an example;
**Figure 17** is an illustration of a block diagram of an aircraft with a modular lavatory monument in accordance with an example;
**Figure 18** is an illustration of a flowchart of a method for replacing a fixture in an aircraft modular lavatory monument in accordance with an example;
**Figure 19** is an illustration of an aircraft manufacturing and service method in the form of a block diagram in accordance with an example; and
**Figure 20** is an illustration of an aircraft in the form of a block diagram in accordance with an example.

### DETAILED DESCRIPTION

The different examples recognize and take into account a number of different considerations. For example, the examples recognize and take into account that, due to the heavy regulatory environment of aircraft, aircraft lavatory monuments are not modular. In other words, while the monument itself is replaceable, the components and parts inside the lavatory are not.

In an effort to support customers with increasing demand for customization and features, the examples provide for an aircraft lavatory monument design was developed with the intention of providing additional feature selections, which would allow customers to differentiate their brands and provide increased levels of service. To accomplish the goal of allowing maximum customization with minimal engineering impact, a modular design system was developed. The modular nature of the concept allows multiple sub-assemblies to be removed and replaced without impacting the surrounding assemblies.

This modularity is achieved, while maintaining the requirements of a heavy regulatory environment, by creating common interface points on each sub assembly that are not allowed to change throughout the different modular packages offered. Additionally, the design is carefully laid out such that each component has an acceptable removal envelope, and optimized to reduce the quantity and accessibility of fasteners required.

As used herein, the term "modular" refers to a component which is removably attached to at least one other component or fixture. The term "modular" with respect to a component or fixture automatically contemplates common interface points on the component that are unchangeable with respect to the lavatory monument; that is, the common interface points are not considered "modular."

The terms "removably attached" or "removeable attachment" refer to a component, fixture, or connection that is easily or quickly replaceable either by hand or the use of tools in a manner that is considered "easy" or "fast" by one of ordinary skill in the art. The terms "easy" or "fast" are determined relative to components that are fixedly attached, or stated differently, intended for permanent and unchanged attachment or formed monolithically with another part of a component. As used herein, the term "about" or "approximately" when used with respect to measurements is determined by the ordinary artisan and is within acceptable engineering tolerances in the regulatory scheme for a given jurisdiction, such as but not limited to the Federal Aviation Administration Federal Aviation Regulations. The term "fixture" refers to a component that can be replaced as an individual unit, such as but not limited to a sink, a faucet, a cabinet, an alcove panel shaped to present an alcove inside the lavatory monument, a toilet paper holder, a drawer, a liquid hose line, a soap dispenser, a soap holder, a towel dispenser, a towel holder, a drawer, a backsplash, a waste receptacle, a counter top, a light strip, a light bulb, a lightable sign, a mirror, a display device, a speaker, a crew signal button, a switch, a panel, a cup holder, an airsick bag dispenser, a tissue dispenser, a sanitary napkin dispenser, a cologne rack, and a shelf.

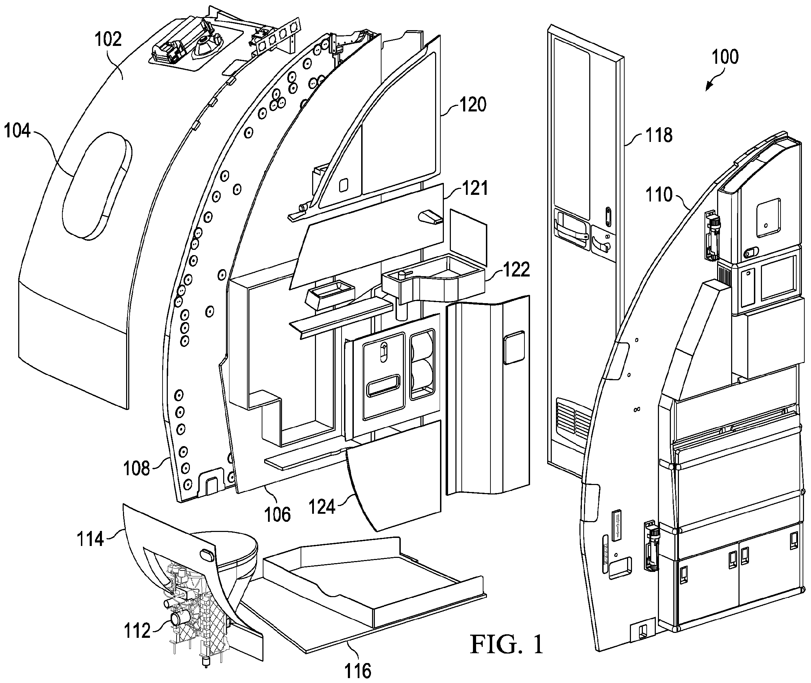

Turning now to **Figure 1****,** an illustration of an exploded view of an aircraft modular lavatory monument is depicted in accordance with an example. Aircraft modular lavatory monument **100,** as indicated above, is provided with common interface points on each sub assembly (the plurality of removably attached lavatory fixtures) that are not allowed to change throughout the different modular packages offered. Thus, common interface points on each of the plurality of lavatory fixtures are unchangeable with respect to the lavatory monument. Additionally, the design is laid out such that each component (the plurality of removably attached lavatory fixtures) has an acceptable removal envelope, and optimized to reduce the quantity of and increase the accessibility of fasteners required.

Aircraft modular lavatory monument **100** includes modular outboard wall **102** which is intended for removeable attachment to a fuselage of an aircraft. Thus, modular outboard wall **102** may be considered part of a frame for aircraft modular lavatory monument **100**. Optionally, aircraft modular lavatory monument **100** may be provided with window **104**, which is placed, sized, and dimensioned to match a window in the corresponding model of aircraft for which aircraft modular lavatory monument **100** is intended.

Aircraft modular lavatory monument **100** also includes modular shell wall **106**, which also forms part of the frame for aircraft modular lavatory monument **100**. Optionally, ballistic intrusion barrier **108** may also be provided, if desirable. In a still further option, modular shell wall **106** may be replaced by ballistic intrusion barrier **108**, in which case ballistic intrusion barrier **108** is "modular." In either case, the corresponding wall or barrier is removably attached to modular outboard wall **102** and radiates inwardly towards a central axis of the fuselage of the aircraft. While shown as radiating at a perpendicular angle to modular outboard wall **102**, the angle shown may be varied in different examples.

Aircraft modular lavatory monument **100** also includes modular aft wall **110**. The term "aft" is used herein merely to distinguish modular shell wall **106** from modular aft wall **110**. Modular aft wall **110** also forms part of the frame of aircraft modular lavatory monument **100**. While the typical aircraft modular lavatory monument **100** will have modular aft wall **110** actually facing the aft portion of an aircraft, this arrangement is not necessary for all examples. For example, the components shown on modular aft wall **110** could face the "forward" portion of the aircraft, at which point modular aft wall **110** becomes a "modular forward wall". Note, also, that the various sub-components or fixtures shown on either modular shell wall **106** or modular aft wall **110** may be re-arranged, reversed with respect to which side of the wall to which the are attached, or otherwise altered with more or fewer sub-components or fixtures.

Aircraft modular lavatory monument **100** also includes modular toilet **112,** modular toilet shroud **114** attached to modular toilet **112,** and modular floor pan **116** to which modular toilet **112** is also attached. Modular toilet **112** is attached to a waste disposal system contained in the fuselage of the aircraft. Optionally, a bidet may be provided inside or next to modular toilet **112.** In the latter case, the bidet may have a bidet shroud similar to modular toilet shroud **114** shown in **Figure 1****.**

Aircraft modular lavatory monument **100** also includes modular door **118.** Modular door **118** may be a folding door, a slab door, a hinged door, a pocket door, or any other desirable door design. Modular door **118** is removably connected to one or both of modular shell wall **106** or modular aft wall **110.**

Aircraft modular lavatory monument **100** also includes modular upper cabinet system **120.** Modular upper cabinet system **120** is one or more modular cabinets, drawers, mirrors or other fixtures which are attached at or about chest height or higher for an average adult female or male (or possibly a child in some examples).

Aircraft modular lavatory monument **100** also includes backsplash assembly **121.** Backsplash assembly **121** is independently removably attached to modular shell wall **106** relative to the other components of aircraft modular lavatory monument **100.**

Aircraft modular lavatory monument **100** also includes modular counter system **122.** Modular counter system **122** is one or more modular sinks, backsplashes, waste receptacle openings, soap holders, soap dispensers, towel dispensers, or other fixtures that are about between about waist and chest height for an average adult female or male (or possibly a child in some examples).

Aircraft modular lavatory monument **100** also includes lower cabinet assembly **124.** Lower cabinet assembly **124** is one or more modular cabinets, toilet paper dispensers, doors, drawers, tissue dispensers, waste receptacles, or other fixtures that are about between about waist and chest height for an average adult female or male (or possibly a child in some examples). In some illustrative examples, lower cabinet assembly **124,** may be referred to as a modular lower cabinet assembly.

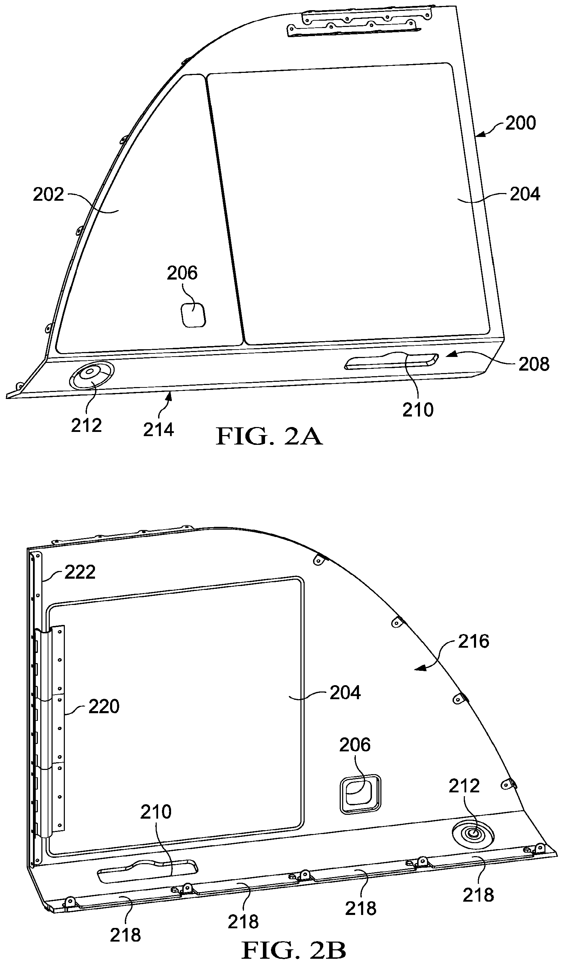

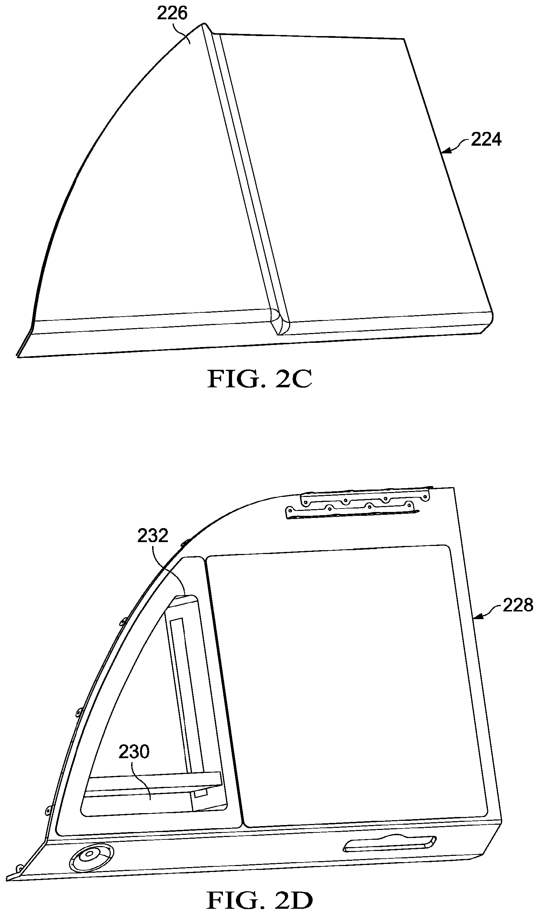

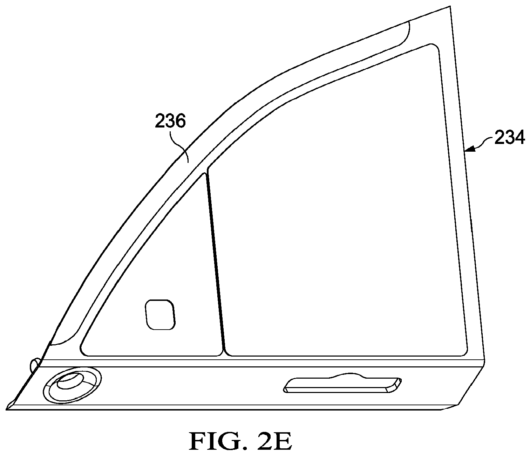

The various modular components and fixtures shown in **Figure 1** may be varied. More or fewer fixtures or walls may be present. The arrangement, type, and style of fixtures or wall may be varied. Additional details regarding some of these variations are described below with respect to **Figure 2** through **Figure 14****.**

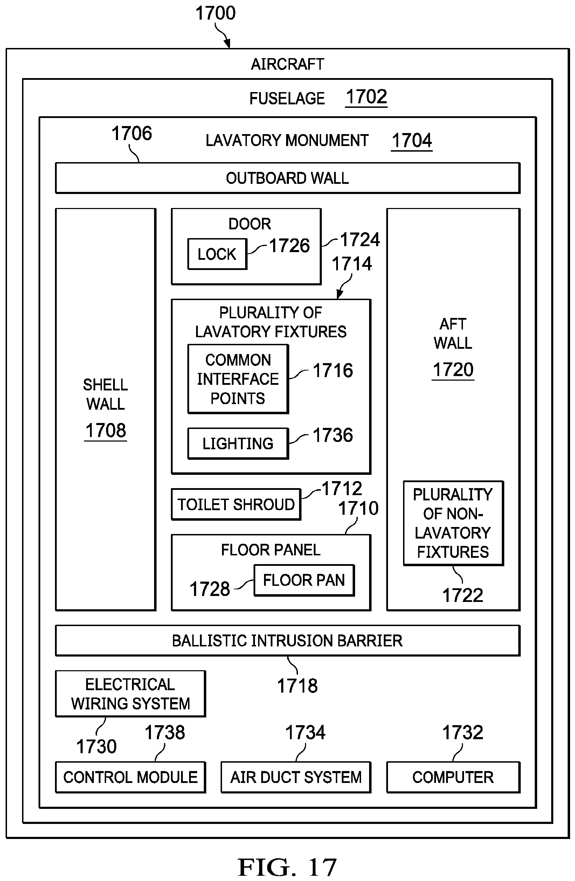

**Figure 2A** through **Figure 2E** are illustrations of portions and options of an upper cabinet of an aircraft modular lavatory monument in accordance with an example. Collectively, **Figure 2A** through **Figure 2E** may be referred to as **"****Figure 2". Figure 2** refers to options for components for modular upper cabinet system **120** of **Figure 1****.** **Figure 2** presents physical implementations of a lavatory fixture of plurality of lavatory fixtures **1714** of **Figure 17****.**

**Figure 2A** shows option **200** with a flat panel **201.** Option **200** has dual mirrors, mirror **202** and mirror **204.** As depicted, mirror **202** includes a tissue cutout **206** for dispensing tissues. In some illustrative examples, tissue cutout **206** is optional. In some illustrative examples, mirror **204** may also serve as a door. Mirror **204** may be provided with a hidden latch system and hinge extrusions for actuation and replaceable attachment. In some illustrative examples, mirror **204** includes in-mirror lighting and/or signs (not shown) such as a "return to seat" lighted signal.

Option **200** includes flange **208.** As depicted, flange **208** includes opening **210** for dispensing paper towels, tissues, or other desirable items. In some illustrative examples, opening **210** is optional.

As depicted, flange **208** includes plenum **212.** In some illustrative examples, plenum **212** is connected to the aircraft air duct system and is used to dispense air. In some illustrative examples, plenum **212** may be referred to as an environmental control system (ECS) plenum. In some illustrative examples, plenum **212** is used to dispense heated air. In some illustrative examples, air provided by plenum **212** is used to aid a user in drying their hands. In some illustrative examples, air provided by plenum **212** is used to dry surfaces within the lavatory, such as countertops. In some illustrative examples, plenum **212** is optional.

As depicted, flange **208** may also include lighting **214.** In some illustrative examples, lighting **214** is called a light lens, a light, or an under-flange light. Lighting **214** may be provided by any desirable quantity or design of lighting items. In some illustrative examples, lighting **214** is positioned to illuminate a countertop of the lavatory.

**Figure 2B** shows backside **216** of option **200.** In backside **216,** lighting **214** takes the form of countertop lights **218.** Also shown is hinge **220** used for opening and closing mirror **204** when mirror **204** acts as a door. Hinge **220** may be any desirable design of hinge. In some illustrative examples, hinge **220** is a gooseneck piano hinge, possibly spring loaded to open. In some illustrative examples, hinge **220** is connected to bracket **222.** Bracket **222** connects option **200** to an outboard wall. In some illustrative examples, hinge **220** removably connects mirror **204** of option **200** to the outboard wall.

**Figure 2C** shows option **224,** with a flat panel and a bumped-out storage area **226** outboard. **Figure 2D** shows option **228** which is a panel that replaces stowage with an open shelf **230** and a one-piece molded alcove feature **232.** **Figure 2E** illustrates option **234,** which is a panel that includes light **236.** Light **236** provides illumination around mirror **202** and mirror **204.** Light **236** may provide illumination for a passenger within the lavatory. In some illustrative examples, light **236** may be referred to as a wash light and lens.

With respect to the upper cabinet area, the free space behind the upper cabinet may be used to house many of the electronics components for the lavatory. The aircraft interface to wire bundle enters the lavatory at upper cabinet. The lavatory controller brain (described further below) acts as hub to take inputs and use them for distribution and control.

A master lighting switch housed inside mirrored door area allows maintenance technicians to flip lights to full bright for cleaning operations. The examples also provide for access to control additional user inputs, such as lighting color adjustment, scene selection, tamper indication display, etc. If desirable, a ground stud interface may be provided. Additionally, electrical breakers, relays, power boxes, and other electrical features may be provided. If desirable, a smart mirror or two-way mirror may be added, as well as a virtual window control and power boxes.

The following are features that may be provided to various components of the upper cabinet system: A smart mirror system (with integral lighting in screen); a tamper indication system; an in-mirror attendant call switch (capacitive); a two-way mirror; in-mirror lighting/signage with multiple colors and signs available; a reliably mount mirror in correct location; a hidden latch system for the door; tissue and/or towel dispensers; a spring loaded gooseneck hinge; countertop lighting (multiple colors). The upper cabinet system is easily removable without affecting ceiling, backsplash, inboard walls, or outboard walls.

Other options are possible. Other designs of the panels are possible, with more or fewer or different features. Optionally, the space behind the upper cabinets may be reserved for future fixture additions. Thus, the examples are not necessarily limited to the examples shown in **Figure 2****.**

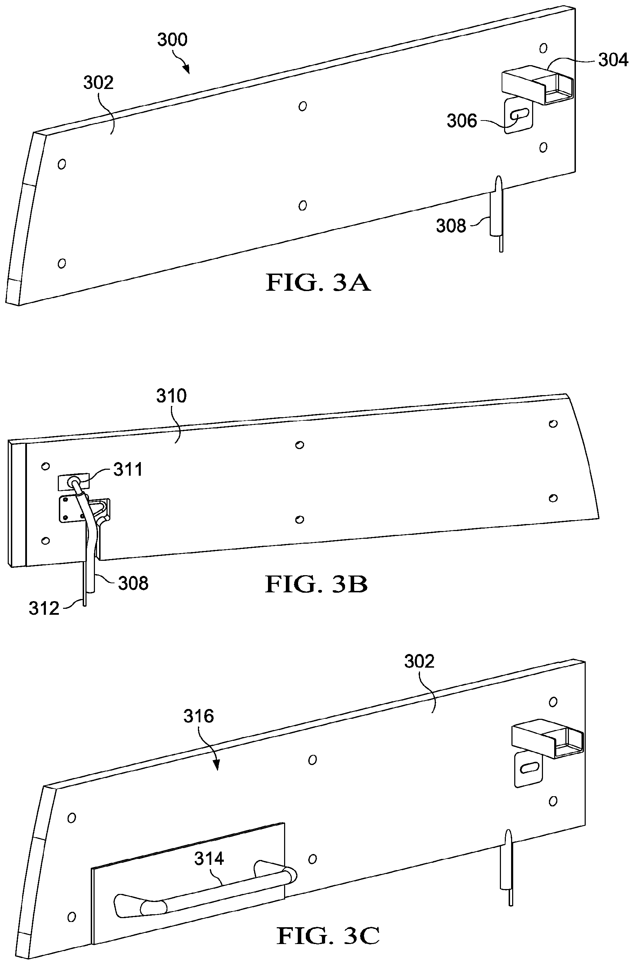

**Figure 3A** through **Figure 3C** are illustrations of backsplash options for an aircraft modular lavatory monument in accordance with an example. Together, **Figure 3A** through **Figure 3C** may be referred to as **"****Figure 3." Figure 3** illustrates options for backsplash assembly **121** of **Figure 1****.** In some illustrative examples, an implementation shown in **Figure 3** may be positioned beneath any desirable option of the options of **Figure 2****.**

**Figure 3** presents physical implementations of at least one lavatory fixture of plurality of lavatory fixtures **1714** of **Figure 17****.** For example, backsplash assembly **300** may be an implementation of a lavatory fixture of plurality of lavatory fixtures **1714** of **Figure 17****.** Faucet **304** may be an implementation of a lavatory fixture of plurality of lavatory fixtures **1714** of **Figure 17****.**

Backsplash assembly **300** includes backsplash sheet **302,** which may be provided in a variety of different styles and colors. Faucet **304** extends from backsplash sheet **302.** In some illustrative examples, faucet **304** is removably attached to backsplash sheet **302.** In some illustrative examples, faucet **304** is attached to a separate component of the lavatory, such as modular shell wall. In these illustrative examples, backsplash sheet **302** is slid over faucet **304.** In these illustrative examples, backsplash sheet **302** has an opening through which faucet **304** extends.

Faucet **304** has any desirable aesthetic design. Faucet **304** may be provided in a variety of different styles and colors. Faucet **304** is actuated using any desirable method. An actuator may include a knob, switch, sensor, or any other actuation device. As depicted in **Figure 3A****,** sensor **306** is present to actuate faucet **304.** In some illustrative examples, sensor **306** is removably attached to backsplash sheet **302.** In some illustrative examples, sensor **306** is removably attached to backsplash sheet **302** independently of faucet **304.** In some illustrative examples, sensor **306** is attached to a different component of the lavatory, such as a modular shell wall.

Sensor **306** may be a touchless sensor, or any other desirable sensor, for sensing when a user desires to dispense water from faucet **304.** Sensor **306** actuates one or more valves for dispensing water, possibly with hot and cold options, through faucet **304.** Water line **308,** which is connected to the aircraft's water distribution system when aircraft modular lavatory monument **100** is connected to the aircraft umbilical, provides a conduit for water.

**Figure 3B** illustrates back side **310** of backsplash sheet **302.** Water line **308** is shown, as is connector **311** and electrical pigtail **312** for providing electrical power to sensor **306** and possibly other components of aircraft modular lavatory monument **100.**

In this illustrative example, faucet **304** is removably attached to backsplash sheet. As depicted, sensor **306** is removably attached to backsplash sheet **302** independently of faucet **304.**

**Figure 3C** illustrates options for backsplash sheet **302.** In particular, towel rack or grip handle **314** is shown removably attached to backsplash sheet **302.** Other options, or different options, may also be mounted on backsplash sheet **302.** More than one such options may be provided. For example, cologne racks, shelves, and other features may be added to backsplash sheet **302.** In another example, lighting **316** may be removably attached to backsplash sheet **302.** In some illustrative examples, an additional decorative sheet is optionally attached to backsplash sheet **302.** In some illustrative examples, the additional decorative sheet is applied after backsplash sheet **302** is attached to the lavatory monument.

The illustrative examples shown in **Figure 3** are not meant to imply physical or architectural limitations to the manner in which an example may be implemented. Other options, styles, and arrangements are also possible.

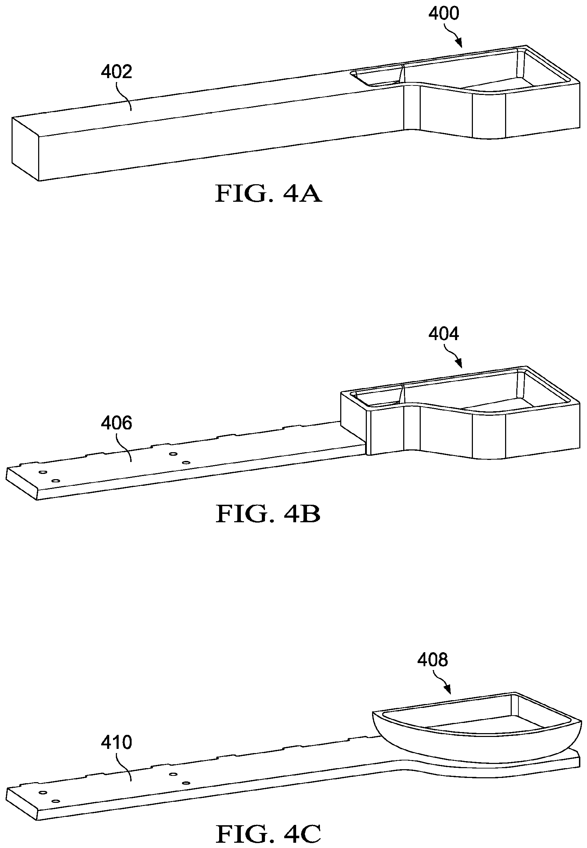

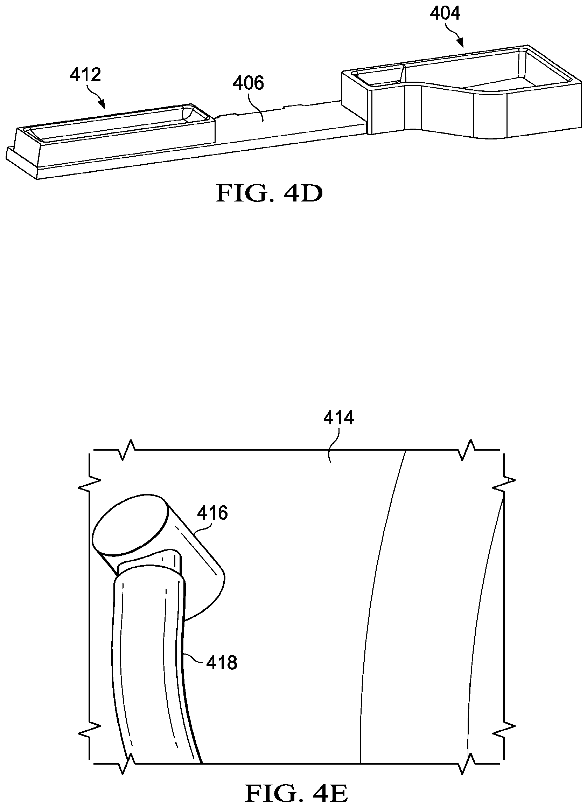

**Figure 4A** through **Figure 4E** are illustrations of sink and counter top options for an aircraft modular lavatory monument in accordance with an example. Together, **Figure 4A** through **Figure 4E** may be referred to as **"****Figure 4****."** Each of the sinks with integral or removably attached countertops shown in **Figure 4** may be removably attached to one of the backsplash or outboard wall of aircraft modular lavatory monument **100.** The sinks with integral or removably attached countertops may be implementations for modular counter system **122** of **Figure 1****.** In some illustrative examples, an implementation shown in **Figure 4** may be positioned beneath any desirable option of the options of **Figure 2****.**

Figure **4** presents physical implementations of at least one lavatory fixture of plurality of lavatory fixtures **1714** of **Figure 17****.** For example, sink **400,** sink **404,** and sink **408** may be implementations of a lavatory fixture of plurality of lavatory fixtures **1714** of **Figure 17****.**

**Figure 4A** illustrates sink **400** integrated monolithically with counter **402.** Sink **400** may be attached to backsplash sheet **302** of **Figure 3** or modular outboard wall **102** of **Figure 1****.** This option may be referred-to as the integral sink bowl option.

**Figure 4B** illustrates sink **404** removably attached to counter **406** at one end of sink **404.** Sink **404** has a different shape than sink **400,** as indicated. Sink **404** may be attached to backsplash sheet **302** of **Figure 3** or modular outboard wall **102** of **Figure 1****.** This option may be referred to as a raised sink bowl option.

**Figure 4C** illustrates sink **408** removably attached to the top of counter **410.** Sink **408** has a different shape than sink **400** or sink **404,** as indicated. Sink **408** may be attached to backsplash sheet **302** of **Figure** 3 or modular shell wall **106** of **Figure 1****.**

**Figure 4D** is similar to **Figure 4B****,** though with different options. In particular, fixture **412** is added to counter **406.** Fixture **412** may be a soap or jewelry holder, as shown, or may be a tray, a cologne rack, towel bar, shelf, or other fixture.

**Figure 4E** illustrates an underside of any of the sinks shown in **Figure 4A** through **Figure 4D****.** Backside **414** of the sink includes drain **416** and hose **418** for receiving waste water, removably attached to drain **416.**

The sinks and countertops described herein may be injection molded or chopped glass fiber materials with finishes to add ascetic attractiveness. Metals, such as Aluminum, could also be used, though preferably the materials should be strong and lightweight.

The illustrative examples shown in **Figure** 4 are not meant to imply physical or architectural limitations to the manner in which an example may be implemented. Other options, styles, and arrangements are also possible.

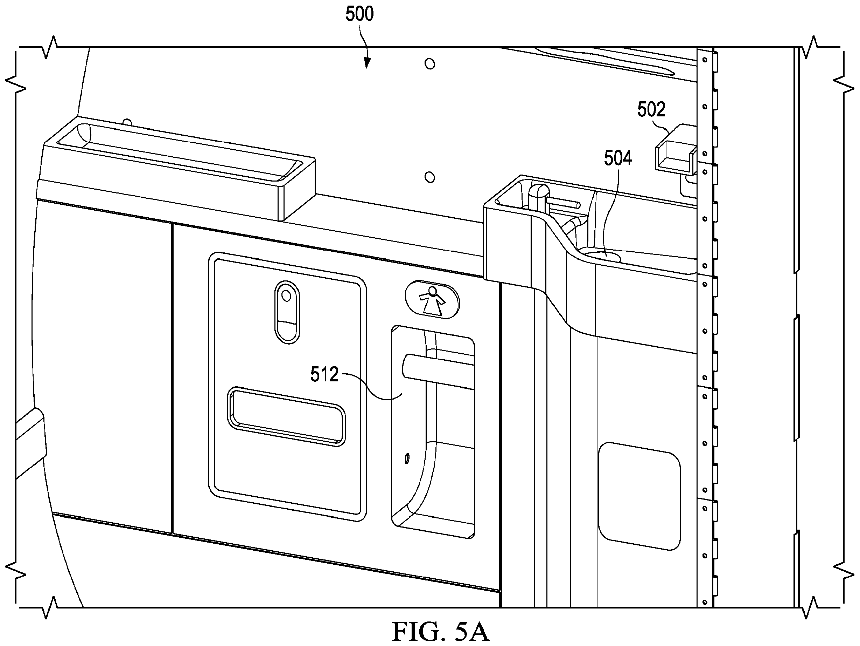

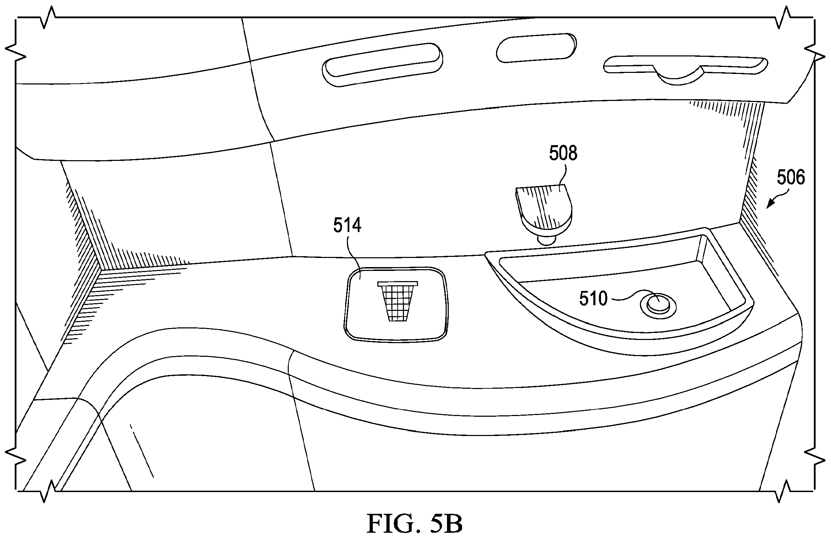

**Figure 5A** and **Figure 5B** are illustrations of sink and countertop options for an aircraft modular lavatory monument in accordance with an example. Together, **Figure 5A** through **Figure 5B** may be referred to as **"****Figure 5****."** **Figure 5A** and **Figure 5B** show different backsplash, sink, and countertop arrangements. For example, in lavatory option **500** of **Figure 5A****,** faucet **502** is provided to one side of drain **504.** However, in lavatory option **506** of **Figure 5B****,** faucet **508** is provided over drain **510.** Different ascetic designs, patterns, and shapes are shown, as well as the location of fixtures, such as waste receptacle **512** in **Figure 5A** versus waste receptacle **514** in **Figure 5B****.**

**Figure** 5 provides a "look and feel" non-limiting example of the inside an aircraft modular lavatory monument, such as aircraft modular lavatory monument **100.** **Figure** 5 provides physical implementations of plurality of lavatory fixtures **1714** of lavatory monument **1704** of **Figure 17****.** However, other options, styles, and arrangements are also possible. The illustrative examples shown in **Figure 5** are not meant to imply physical or architectural limitations to the manner in which an example may be implemented.

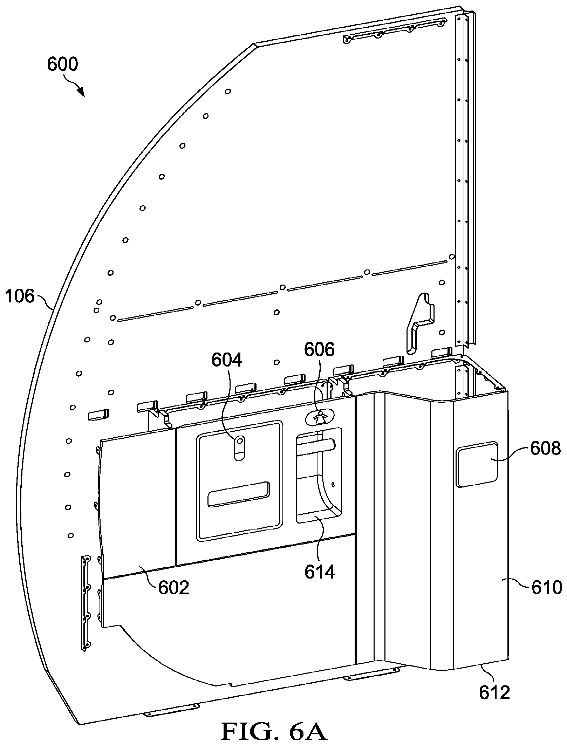

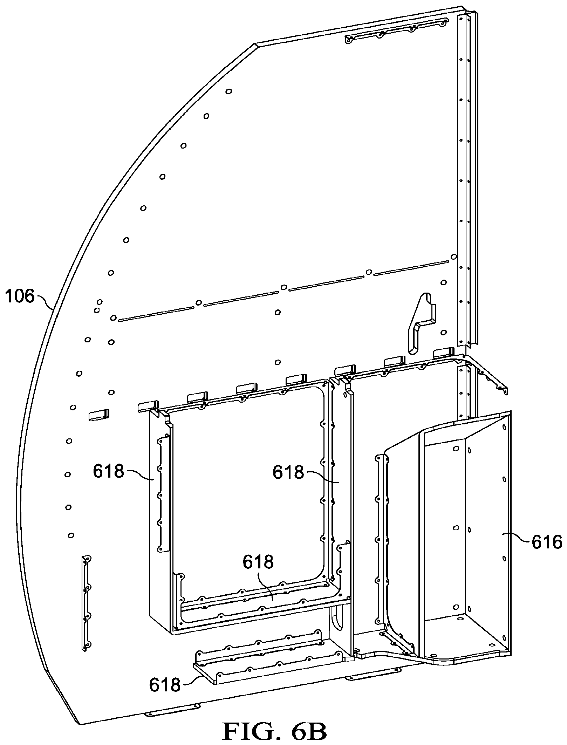

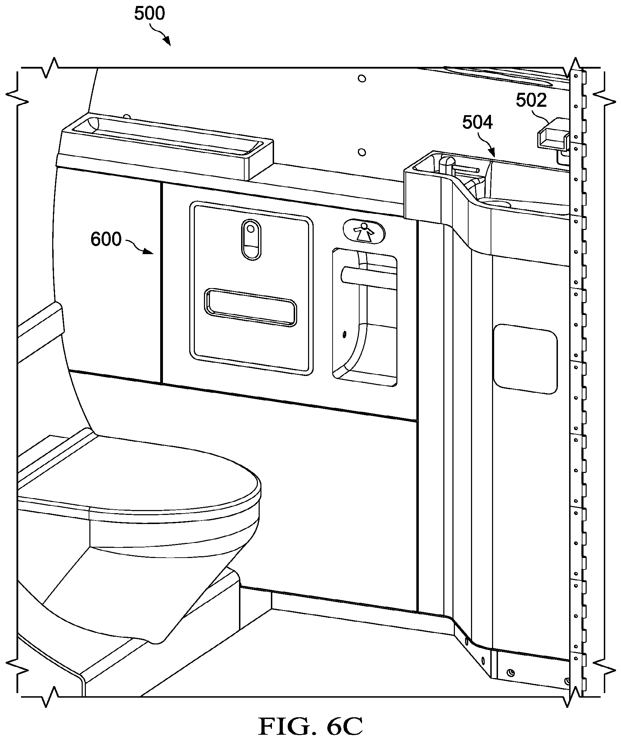

**Figure 6A** through **Figure 6C** are illustrations of lower storage and wall options for an aircraft modular lavatory monument in accordance with an example. Together, **Figure 6A** through **Figure 6C** may be referred to as **"****Figure 6****".** The features shown in **Figure 6** are ultimately mounted to modular shell wall **106** of **Figure 1****.**

Turning now to **Figure 6A****,** lower cabinet assembly **600** is depicted mounted to modular shell wall **106.** In **Figure 6A****,** lower cabinet assembly **600** is depicted without an upper cabinet assembly, backsplash, or counter. Lower cabinet assembly **600** is one non-limiting example of a lower cabinet assembly that may be present in lavatory monument **1704** of **Figure 17****.**

Lower cabinet assembly **600** includes one and preferably several options mounted to modular shell wall **106.** For example, lower cabinet assembly **600** may include drawer **602** for additional storage. Lower cabinet assembly **600** may also include tissue or airsick bag dispenser **604.** Lower cabinet assembly **600** may also include attendant call switch or display sign **606.**

Lower cabinet assembly **600** may also include waste containment flap **608,** which may be either manually actuated (pushed about a hinge or actuated with a foot pedal) or automatically actuated using a sensor in conjunction with a motor on waste containment flap **608.** Lower cabinet assembly **600** may also include waste containment door **610** so that a waste receptacle disposed on the other side of waste containment door **610** can be maintenance.

Lower cabinet assembly **600** may also include floor lights **612,** which may be provided in a variety of different colors and optionally may change colors during particular phases of flight or at the option of the operator. Lower cabinet assembly **600** may also include toilet paper dispenser **614.**

**Figure 6B** illustrates mounting fixtures for mounting the various components shown for lower cabinet assembly **600** of **Figure 6A****.** Thus, for example, box **616** may hold the waste receptacle on the other side of waste containment door **610.** Mounting beams **618** may be used to removably attach the various other components described with respect to **Figure 6A****.** These features allow for easy removeable attachment of the various fixtures shown in **Figure 6A****.** Mounting beams **618** provide for ease of removal and replacement of the various fixtures shown in **Figure 6A** or any other fixtures having the common interface points.

**Figure 6B** also illustrates the usefulness of providing modular shell wall **106** in addition to ballistic intrusion barrier **108** of **Figure 1****,** and may be one of several features which are provided because of the heavy regulatory environment of aircraft lavatory monuments. By using modular shell wall **106** as an adapter panel, it is possible to eliminate a number of ballistic inserts from the ballistic wall panel, which provides cost and weight savings while maintaining the regulatory need for, in some aircraft designs, ballistic intrusion barrier **108.**

The examples are not necessarily limited to the options shown in **Figure 6B****.** Other features that may be added include, but are not limited to: a water heater; an actuated faucet supply valve; a temperature mix valve; an automatic drain valve; a water supply shutoff valve; and a water system drain valve. This valve may be included because the supply for the lavatory monument comes from above, and extends down below the faucet height for the toilet. A separate run to a drain port on the skin is included on the airframe in order to drain the supply line, as removal of the monument would require draining the supply line.

Other features that may be added include a water supply lines; a gray water drain line; sloped plumbing as required by aircraft regulations; a fire extinguisher; a water filter; and others.

**Figure 6C** illustrates one arrangement for lower cabinet assembly **600** shown in **Figure 6A**, as it would appear to a user entering the lavatory monument. **Figure 6C** provides a "look and feel" non-limiting example of the inside of an aircraft modular lavatory monument, such as aircraft modular lavatory monument **100** of **Figure 1**. **Figure 6C** is a view of lower cabinet assembly **600** with faucet **502** is provided to one side of drain **504** as in lavatory option **500** of **Figure 5A**. Lower cabinet assembly **600** may be used with any desirable backsplash, counter, or any other desirable lavatory fixtures.

**Figure 6** provides physical implementations of plurality of lavatory fixtures **1714** of lavatory monument **1704** of **Figure 17**. Other options, styles, and arrangements are also possible. The illustrative examples shown in **Figure 6** are not meant to imply physical or architectural limitations to the manner in which an example may be implemented.

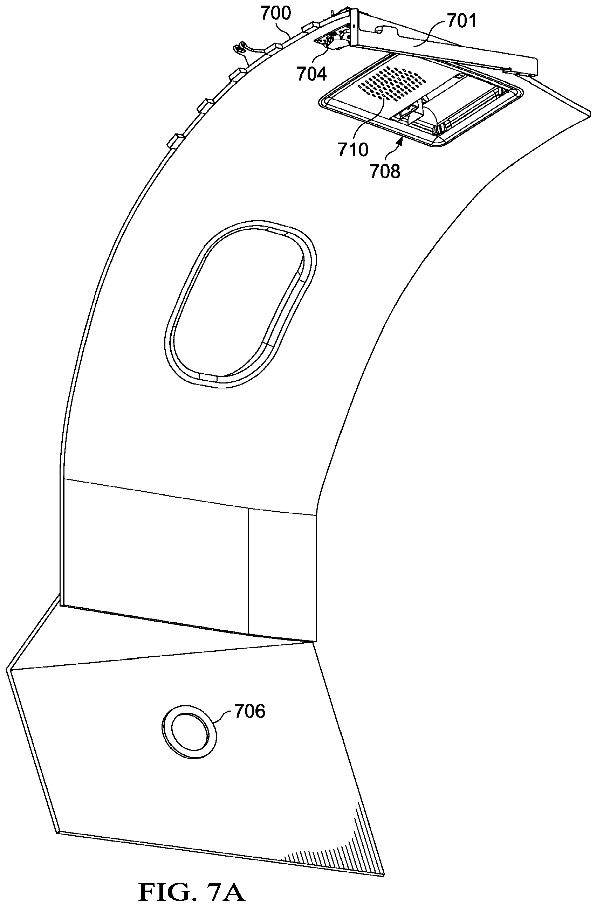

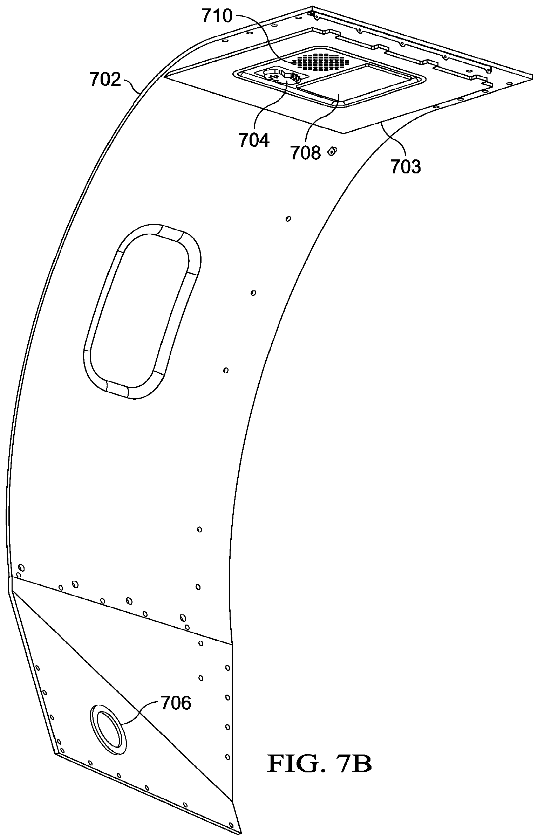

**Figure 7A** and **Figure 7B** are illustrations of outboard wall and ceiling options for an aircraft modular lavatory monument in accordance with an example. Together, **Figures 7A** and **Figure 7B** may be referred to as "**Figure 7**."

Outboard wall **700** and outboard wall **702** may be variations of modular outboard wall **102** of **Figure 1**. Outboard wall **700** and outboard wall 702 may be physical implementations of outboard wall **1706** of **Figure 17**.

Outboard wall **700** and outboard wall **702** have different shapes to accommodate different aircraft, as shown. Different features may also be provided. For example, outboard wall **700** may include machined door header **701,** whereas outboard wall **702** includes ceiling panel **703.** Smoke detector **704** may be included on one or both of the outboard wall designs.

These outboard walls may include different options. For example, the following may be provided: a virtual window; a corner handle; a diaper changing table; a shelf; a speaker (hidden or otherwise); an oxygen dispenser; a toilet seat covers integrated into modular shell wall **106** of **Figure 1****;** a ceiling or wall light; and others. For example, as depicted, outboard wall **700** and outboard wall **702** each have systems panel **708.** In some illustrative examples, systems panel **708** provides speaker **710.**

**Figure 7** also illustrates the unique regulatory environment in which aircraft modular lavatory monument **100** is produced. For example, all orifices for receiving wires and fluid lines need to be sealed and/or blanketed for fire containment per governmental regulations. Additionally, aircraft modular lavatory monument **100,** and therefore outboard wall **700** and outboard wall **702** are provided with aircraft umbilical interface point **706** such that aircraft modular lavatory monument **100** may be integrated with the fluid and electrical systems of the aircraft as a whole.

Other options, styles, and arrangements are also possible. The illustrative examples shown in **Figure 7** are not meant to imply physical or architectural limitations to the manner in which an example may be implemented.

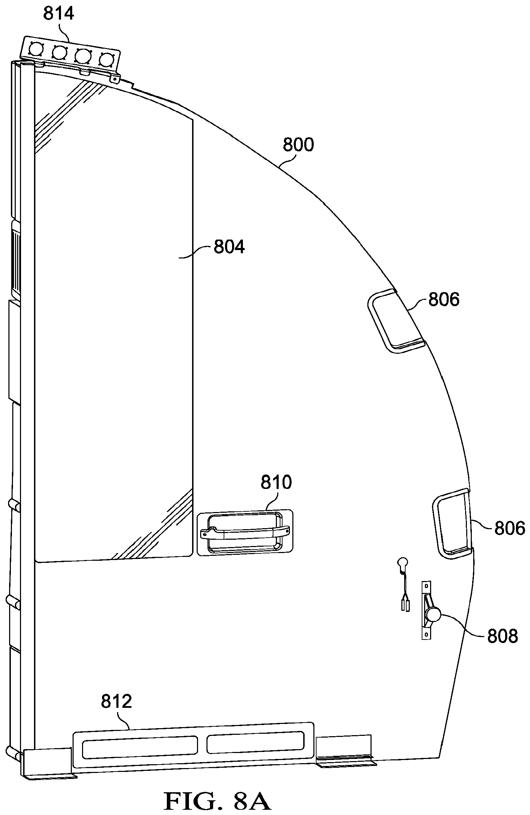

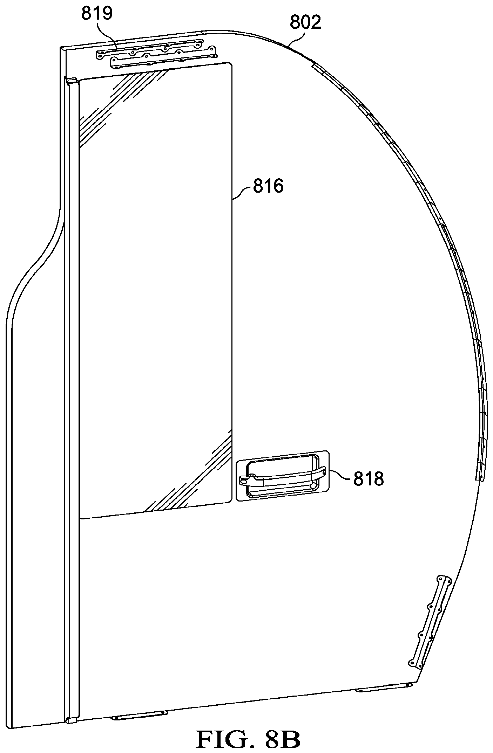

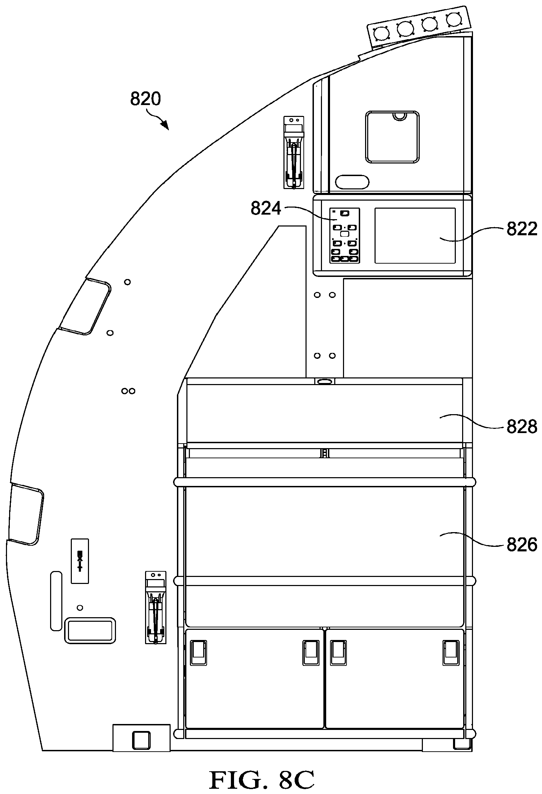

**Figure 8A** through **Figure 8C** are illustrations of aft wall options for an aircraft modular lavatory monument in accordance with an example. In particular, aft wall **800,** aft wall **802,** and aft wall **820** may be modular aft wall **110** of **Figure 1****.** Together, **Figure 8A** through **Figure 8C** may be referred to as **"****Figure 8****."** Aft wall **800,** aft wall **802,** and aft wall **820** may be physical implementations of aft wall **1720** of **Figure 17****.**

As depicted, aft wall **800** of **Figure 8A** is an implementation of an aft wall adjacent an aircraft entry door. View of aft wall **800** of **Figure 8A** is an interior view within a lavatory, such as aircraft modular lavatory monument **100** of **Figure 1****.** Aft wall **800** includes mirror **804,** aircraft door flaps **806** and vent **808** for providing heated air. Aircraft door flaps **806** in aft wall **800** allow aircraft door snubbers to pass through aft wall **800** when the aircraft entry door is opened.

Also provided are assist handle **810,** lighting panels **812,** and attachment flange **814** for attaching aft wall **800** to a fuselage within an aircraft, such as fuselage **1702** of aircraft **1700.**

As depicted, aft wall **802** of **Figure 8B** is an implementation of an aft wall of a lavatory that is not adjacent to an aircraft entry door. For example, aft wall **802** may be within a lavatory in the center or the rear of the cabin of an aircraft, such as aircraft **1700** of **Figure 17****.** View of aft wall **802** in **Figure 8B** is an interior view within a lavatory, such as aircraft modular lavatory monument **100** of **Figure 1****.** Aft wall **802** includes mirror **816** and assist handle **818.** Attachment feature **819,** in this example, does not extend the height of the aft wall, as is the case with attachment flange **814** in **Figure 8A****.**

As depicted, aft wall **820** of **Figure 8C** is an implementation of an aft wall of a lavatory that is adjacent to an aircraft entry door. View of aft wall **820** in **Figure 8C** is a view of aft wall **820** outside of a lavatory, such as aircraft modular lavatory monument **100** of **Figure 1****.** For example, aft wall **820** may be an implementation of an exterior of aft wall **800** of **Figure 8A****.** View of aft wall **820** may be the side of aft wall **820** visible to passengers upon entering an aircraft, such as aircraft **1700** of **Figure 17****.** View of aft wall **802** in **Figure 8B** is an interior view within a lavatory, such as aircraft modular lavatory monument **100** of **Figure 1****.** Aft wall **820** includes many features, including cabinetry as shown. Also shown is display screen **822,** user interface **824,** and other features which may be provided as described elsewhere herein.

In some examples, the aft wall is provisioned for a large number of interfaces, including attendant seats, such as foldable attendant seat **826.** It is desirable for aft walls, such as aft wall **820,** to be designed in terms of shape and materials to hold high loads due to attendant seats and other equipment interfaces. Conventional attendant seat plug and sleeve inserts would undesirably be seen from the inside of the lavatory. The aft wall, such as aft wall **800,** aft wall **802,** or aft wall **820,** may have imbedded foam kits and metal details to deal with wire pass throughs and attendant seat mounting.

It is also desirable for an aircraft electrical umbilical to route through the aft wall, so wiring clamshells may be provided in the aft wall. The aft wall may be provided with the aircraft electrical umbilical interface for the lavatory.

Thus, **Figure 8** shows that the aft wall may include a number of different features. The aft wall may be provided with floor fittings. An assist handle may be provided. A foldable diaper changing table **828** may be provided. In some illustrative examples, the aft wall may be provided with an ECS routing for a door heat grille.

Other options, styles, and arrangements are also possible. The illustrative examples shown in **Figure 8** are not meant to imply physical or architectural limitations to the manner in which an example may be implemented.

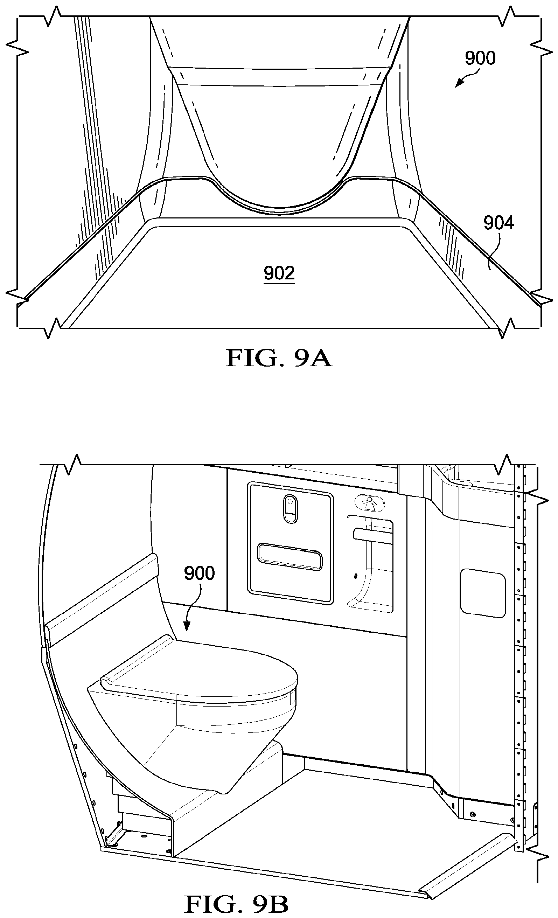

**Figure 9A** and **Figure 9B** are illustrations of toilet shroud options for an aircraft modular lavatory monument in accordance with an example. **Figure 9A** and **Figure 9B** may be examples of toilet shroud **114** of aircraft modular lavatory monument **100** of **Figure 1****.** Together, **Figure 9A** and **Figure 9B** may be referred to as **"****Figure 9". Figure 9A** is a top-down view of the toilet shroud **900.** **Figure 9B** is a perspective view of toilet shroud **900.** Toilet shroud **900** and floor pan **902** provide examples of one possible "look and feel" of the toilet shroud and lavatory of the examples described herein. Toilet shroud **900** and floor pan **902** are physical implementations of toilet shroud **1712** and floor pan **1728** of **Figure 17****.**

In some illustrative examples, additional structural features are present. For example, toilet shroud **900** may be provided with at least one of electronic latches or a tamper indication system.

As depicted, toilet shroud **900** is a one-piece toilet shroud. Having a one-piece toilet shroud reduces the number of sealing areas for toilet shroud **900.** Toilet shroud **900** is designed and manufactured with materials selected to resist wear and tear. Toilet shroud **900** is designed and manufactured with a shape and materials selected based on at least one of manufacturability, aesthetics, ease of cleaning, or other desirable characteristics. Manufacturing a one-piece toilet shroud may use a large manufacturing pressure within a mold or press.

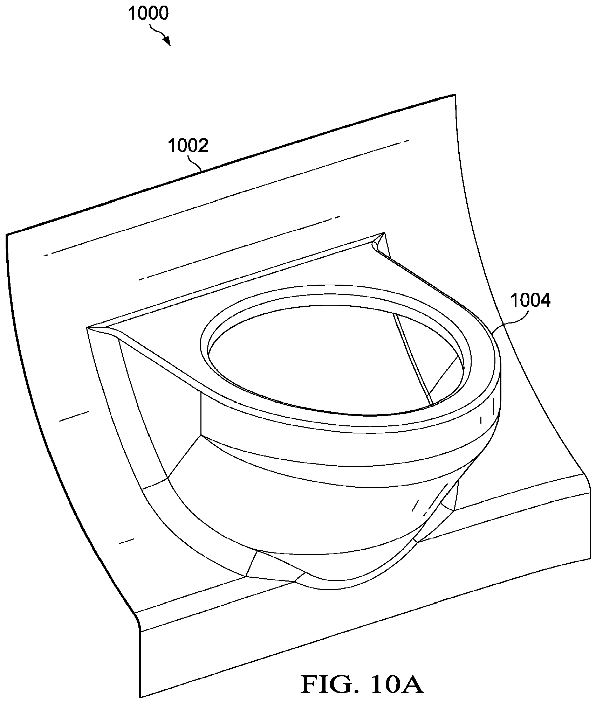

While toilet shroud **900** is shown as being a monolithic shroud, in other illustrative examples, a toilet shroud may be formed of any desirable quantity of pieces. In some illustrative examples, a three-piece shroud may be used. Manufacturing a three-piece toilet shroud reduces the manufacturing pressure in a press. Increasing the quantity of pieces for toilet shroud **900** would also increase the quantity of sealing areas. A three-piece toilet shroud arrangement is shown in **Figure 10A** through **Figure 10D****.**

Floor pan **902** includes interface **904** between floor pan **902** and toilet shroud **900.** Floor pan **902** is desirably easily removable and replaceable. Floor pan **902** is configured to easily allow floor fitting access in final assembly.

Materials for toilet shroud **900** and floor pan **902** are selected based on at least one of manufacturability, weight, cost, or ease of cleaning. Toilet shroud **900** and floor pan **902** will have high customer exposure in an aircraft. A thermoformed plastic is a useful material for floor pan **902.**

In some illustrative examples, floor pan **902** is provided with weep holes to allow water leaks behind toilet shroud **900** to be detected. Floor pan **902** must be sealed up to 4" around the floor of the lavatory, per government regulations.

Other options, styles, and arrangements are also possible. Therefore, the illustrative examples shown in **Figure 9** are not meant to imply physical or architectural limitations to the manner in which an example may be implemented.

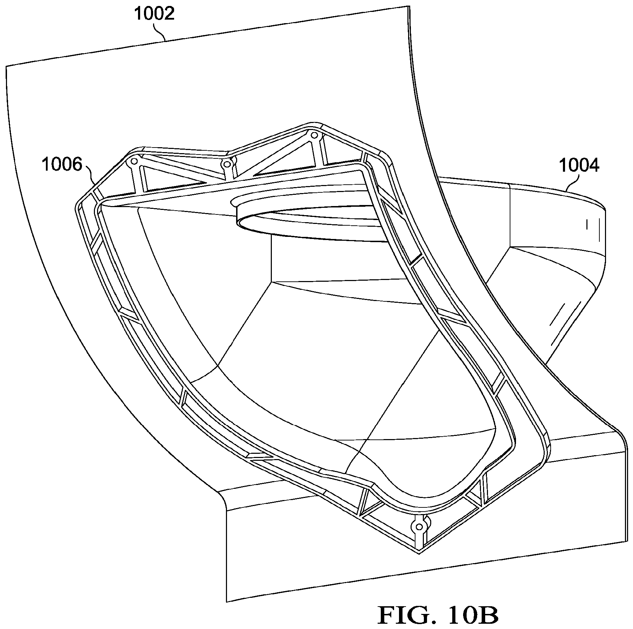

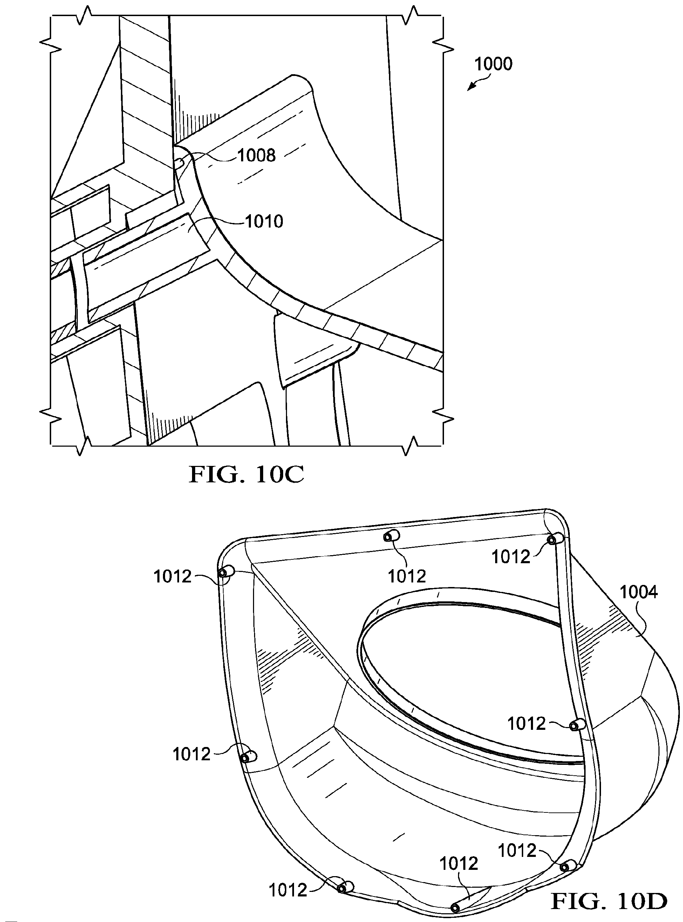

**Figure 10A** through **Figure 10D** are illustrations of toilet shroud options for an aircraft modular lavatory monument in accordance with an example. **Figure 10A** through **Figure 10D** may be examples of toilet shroud **114** of aircraft modular lavatory monument **100** of **Figure 1****.** Together, **Figure 10A** through **Figure 10D** may be referred to as **"****Figure 10****".** These figures describe the three-piece shroud arrangement mentioned in **Figure 9****.** **Figure 10** presents physical implementations of toilet shroud **1712** and floor pan **1728** of **Figure 17****.**

Toilet shroud **1000** includes three pieces, including panel **1002,** bowl shroud **1004,** and backing plate **1006.** Backing plate **1006** is used to reinforce and secure the attachment of bowl shroud **1004** to panel **1002.** The panel **1002** may be clamped between backing plate **1006** and bowl shroud **1004** when fasteners therebetween are tightened.

Each of panel **1002,** bowl shroud **1004,** and backing plate **1006** is formed of any desirable material. In some illustrative examples, panel **1002** is formed of a different material than either bowl shroud **1004** or backing plate **1006.** In some illustrative examples, bowl shroud **1004** and backing plate **1006** are formed of molded polymeric materials. In some illustrative examples, panel **1002** is formed of a composite sandwich material. In some illustrative examples, panel **1002** is formed of a crush core fiberglass panel.

**Figure 10C** shows a cross-section of toilet shroud **1000** in order to show the connection between bowl shroud **1004** and panel **1002.** In particular, sealant slot **1008** is filled with a material, such as silicone, so that the flange flexes slightly as fasteners are tightened for a comprehensive fit on to panel **1002.**

As depicted, insert **1010** is provided in bowl shroud **1004.** In some illustrative examples, insert **1010** is a threaded metal insert. Insert **1010** is configured to receive a fastener. Insert **1010** increases the strength of connections between bowl shroud **1004** and backing plate **1006.** Insert **1010** may aid in the repeatability of assembly and disassembly. Insert **1010** may be installed through heating or ultrasonic installation.

In some other illustrative examples, fasteners extend through backing plate **1006** and are tightened directly into bowl shroud **1004.** In these illustrative examples, insert **1010** is not present.

**Figure 10D** illustrates a back view of the bowl shroud **1004,** along with connection points **1012** that are used to connect bowl shroud **1004** to backing plate **1006.** In **Figure 10D****,** bowl shroud **1004** is not yet attached to panel **1002** or backing plate **1006.** In some illustrative examples, each of connection points **1012** includes a metal insert, such as insert **1010.**

Other options, styles, and arrangements are also possible. The illustrative examples shown in **Figure 10** are not meant to imply physical or architectural limitations to the manner in which an example may be implemented.

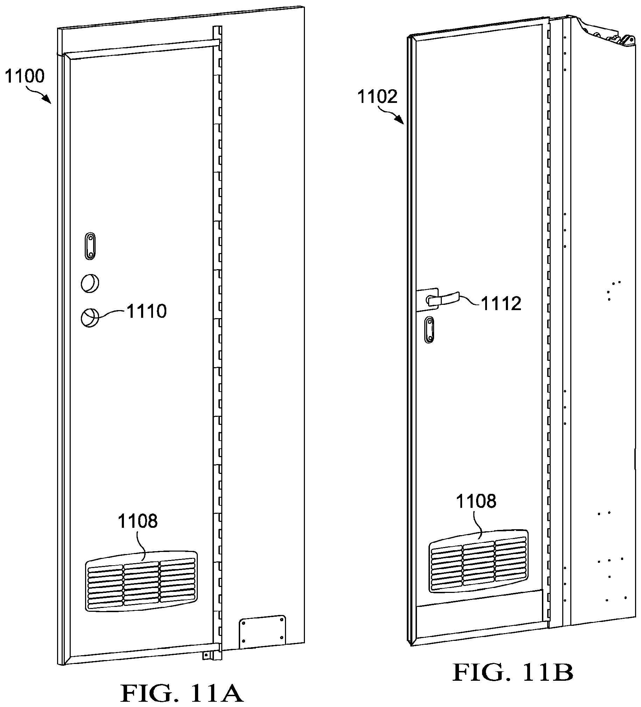

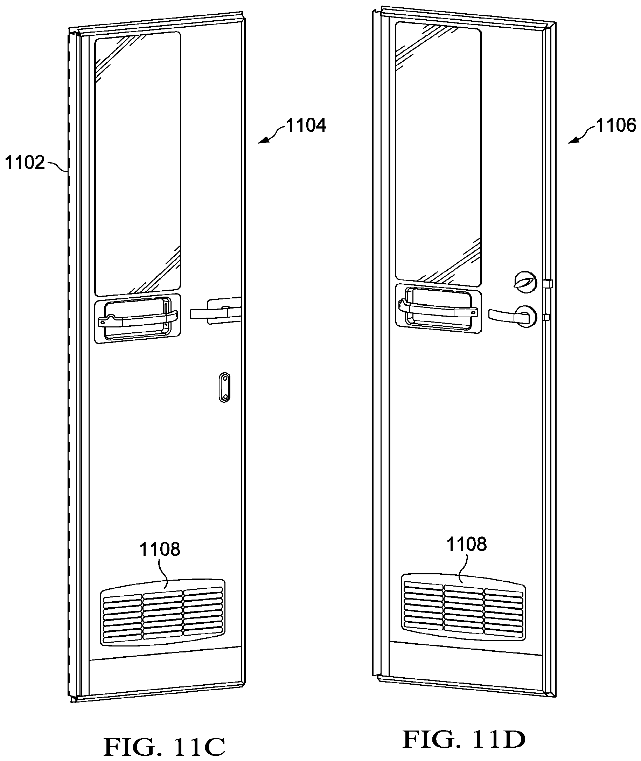

**Figure 11A** through **Figure 11D** are illustrations of door options for an aircraft modular lavatory monument in accordance with an example. Together, **Figure 11A** through **Figure 11D** may be referred to as **"****Figure 11****".** Door **1100,** door **1102,** door **1104,** and door **1106** may be examples of modular door **118** of **Figure 1****.** Door **1100,** door **1102,** door **1104,** and door **1106** may be physical implementations of door **1724** of **Figure 17****.**

Door **1100,** door **1102,** and door **1104** all show different door arrangements and features, any of which could be removably attached to a particular aircraft lavatory monument. Door **1106** illustrates a specific example which shows a possible "look and feel" of a particular door design.

As depicted, each of the doors, door **1100,** door **1102,** door **1104,** and door **1106,** includes vent **1108** to allow air exchange between the inside of the aircraft lavatory monument and the rest of the interior of the fuselage of the aircraft. Vent **1108** may be sized, dimensioned, and designed to prevent flame from exiting the lavatory. In some illustrative examples, vent **1108** includes two louvre assemblies. In these illustrative examples, the louvres are configured to create a "tortuous path." The "tortuous path" reduces or eliminates flame paths through vent **1108.** In some illustrative examples, a screen is sandwiched between the two louvre assemblies. The screen is configured to provide additional flame containment. In some illustrative examples, the louvre assemblies are mirror images of each other about the screen.

In **Figure 11A****,** a handle is not present in door **1100.** In **Figure 11A****,** holes **1110** are visible. Holes **1110** may be provided so that a door handle, such as door handle **1112,** may be easily removably attached to the door.

**Figure 11A** and **Figure 11B** are views from an exterior of a modular aircraft lavatory monument. **Figure 11A** and **Figure 11B** are examples of the exterior side of doors that may be viewed from within a cabin of an aircraft. **Figure 11C** and **Figure 11D** are views from an interior of a modular aircraft lavatory monument. **Figure 11C** and **Figure 11D** are examples of an "interior" side of doors that are not visible within the cabin when the door is closed.

Additional features may be provided. For example, mirror **1114,** assist handle **1116,** ashtray **1118,** or additional features may be added. For example, the door may be a power door. Lighting may be provided for the latch or assist handle. Edge potted inserts may be provided.

Although each of door **1100,** door **1102,** door **1104,** and door **1106** is depicted as a slab door with a single hinge, a door for an aircraft modular lavatory monument may take any desirable form. The door may be a bifold door, a pocket door, a multiply hinged door, or other type of door. The door may be provided with a lock override so that staff can enter a locked lavatory to assist a person in need. An illuminated occupancy indication light may be provided. A limit switch and sensor may be present to so that a display or sign can indicate when the door is open, closed, or locked. The door may be provided with pinchless hinges.

Other options, styles, and arrangements are also possible. The illustrative examples shown in **Figure 11** are not meant to imply physical or architectural limitations to the manner in which an example may be implemented.

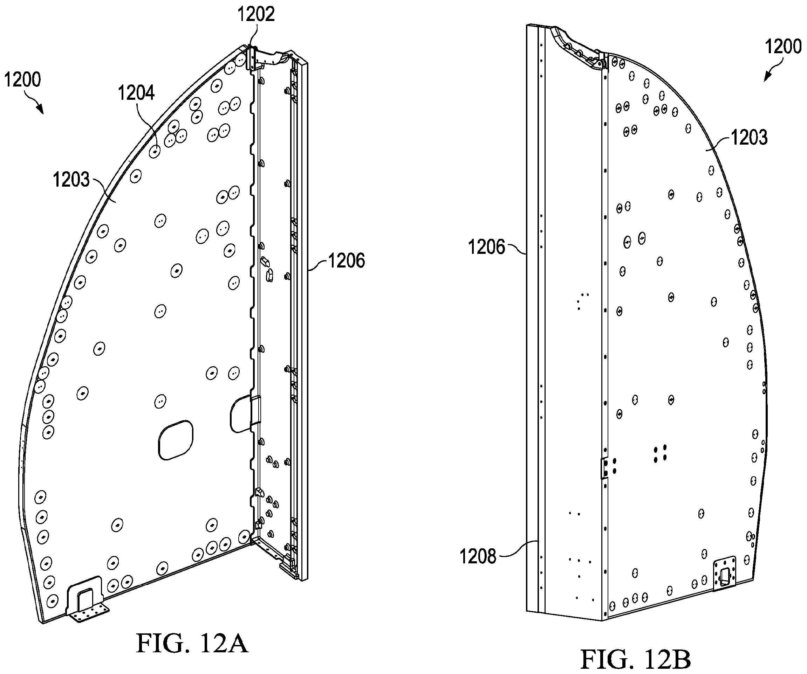

**Figure 12A** and **Figure 12B** are illustrations of ballistic intrusion barrier options for an aircraft modular lavatory monument in accordance with an example. Together, **Figure 12A** and **Figure 12** may be referred to as **"****Figure 12". Figure 12A** and **Figure 12B** illustrate different sides of the same ballistic intrusion barrier. Ballistic intrusion barrier **1200** may be ballistic intrusion barrier **108** of **Figure 1****.** In some illustrative examples, ballistic intrusion barrier **1200** may be referred to as a ballistic barrier, ballistic barrier wall, or a ballistic intrusion barrier wall.

Ballistic intrusion barrier **1200** is an optional component present in selected lavatory monuments. Ballistic intrusion barrier **1200** may be used in lavatory monuments in the front of a passenger cabin in an aircraft.

Ballistic intrusion barrier **1200** may include shield **1202,** which may be formed from titanium or other ballistically resistant material, including ceramics, honey-combed layered composite materials, and others. Shield **1202** of ballistic intrusion barrier **1200** is joined to panel **1203.** Panel **1203** is formed of any desirable ballistically resistant material. In some illustrative examples, panel **1203** is formed of layers of aramid fibers. Ballistic inserts, such as ballistic insert **1204,** extend through panel **1203.** Ballistic inserts provide connection points for joining structures to panel **1203.** Ballistic inserts provide additional shielding in locations where fasteners extend through panel **1203.** In some illustrative examples, ballistic inserts provide additional shielding in the form of a metal plate of the ballistic insert.

Ballistic intrusion barrier **1200** also comprises side wall **1206.** Side wall **1206** is formed of titanium or any desirable ballistically resistant material. Side wall **1206** may be provided with a door hinge interface **1208** in some examples.

Other options, styles, and arrangements are also possible. The illustrative examples shown in **Figure 12** are not meant to imply physical or architectural limitations to the manner in which an example may be implemented.

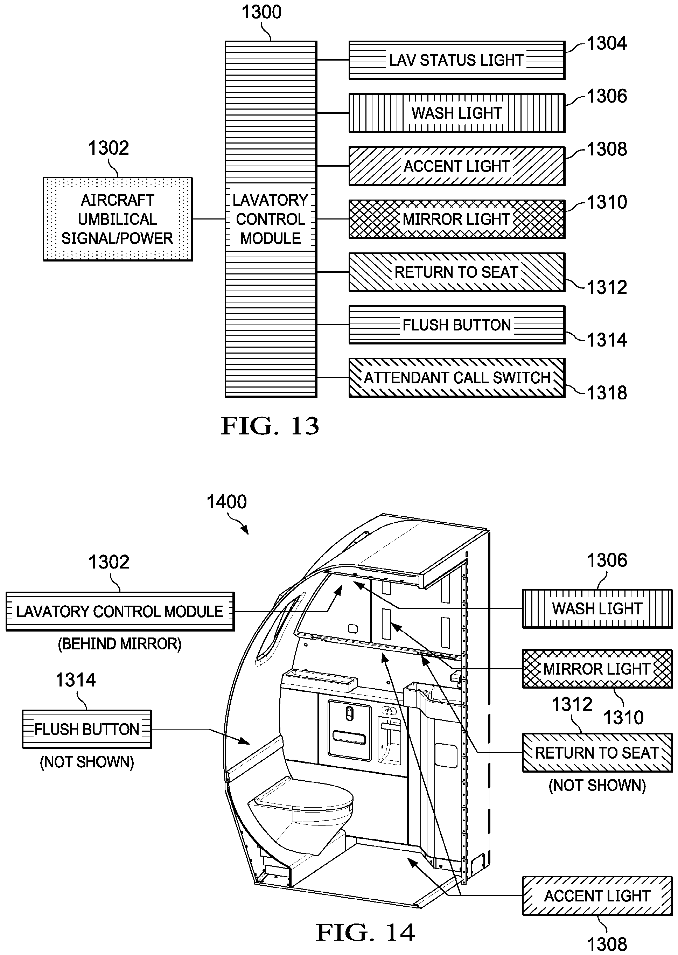

**Figure 13** is an illustration of a block diagram of a lighting system for an aircraft modular lavatory monument in accordance with an example. Lavatory control module **1300** may be attached to any of the walls or ceiling of aircraft modular lavatory monument **100** of **Figure 1****.** Lavatory control module **1300** connects to aircraft electrical umbilical **1302,** which provides signals, power, and possibly fluid lines to aircraft modular lavatory monument **100.** Lavatory control module **1300** may be one or more computers or application specific integrated circuits.

Lavatory control module **1300** may control various aspects of the lighting for aircraft modular lavatory monument **100.** For example, lavatory control module **1300** may control lavatory status lights **1304.** These may be variously colored lights, such as but not limited to red, green, and amber, that indicate lavatory occupancy or the status of an attendant call.

In another example, lavatory control module **1300** may control wash lights **1306.** These lights may be high lumen lights to serve as the primary light source for aircraft modular lavatory monument **100.** A variety of colors, possibly variable colors, may be provided. Such lights can be mounted in the ceiling, upper cabinet, or walls of aircraft modular lavatory monument **100.**

In yet another example, lavatory control module **1300** may control accent lights **1308.** Accent lights include countertop lights, backsplash lights, and/or kick accent lighting. A variety of colors, possibly variable colors, may be provided.

In still another example, lavatory control module **1300** may include mirror lights **1310.** Mirror lights are preferably soft, warm lights that shine through or on the mirror such that a person's face is illuminated when looking in the mirror. The terms "soft" and "warm" are understood by the ordinary artisan, such as for example as described on the product labels of commercially available lights.

In another example, lavatory control module **1300** may include return to seat sign **1312.** This sign may be a light emitting diode (LED) that may shine through the mirror, or may be located elsewhere in aircraft modular lavatory monument **100.** The control logic for this sign is preferably transferred through aircraft electrical umbilical **1302** into lavatory control module **1300** to return to seat sign **1312.**

In still another example, lavatory control module **1300** may include flush button **1314.** This button may be a light emitting diode that illuminates and thus easily identifies the button used to actuate flushing of the toilet.

In yet another example, lavatory control module **1300** may include attendant call switch **1318.** This switch may be a light emitting diode that illuminates when pushed and turns off with the lavatory status switch.

Other options, styles, and arrangements are also possible. The illustrative examples shown in **Figure 13** are not meant to imply physical or architectural limitations to the manner in which an example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an example.

**Figure 14** is an illustration of an arrangement of lights for a lighting system for an aircraft modular lavatory monument in accordance with an example. Lavatory **1400** may be an example of the "look and feel" of the inside of an actual aircraft lavatory monument. Lavatory **1400** also shows possible locations for the various components shown in **Figure 13****.** Thus, for example, lavatory control module **1300,** wash light **1306,** accent lights **1308,** mirror lights **1310,** return to seat sign **1312,** and flush button **1314** may be located as shown in **Figure 14****.** Lavatory **1400** may be the same as aircraft modular lavatory monument **100** of **Figure 1****.** Lavatory **1400** is a physical implementation of lavatory monument **1704** of **Figure 17****.**

Other options, styles, and arrangements are also possible. The illustrative examples shown in **Figure 14** are not meant to imply physical or architectural limitations to the manner in which an example may be implemented.

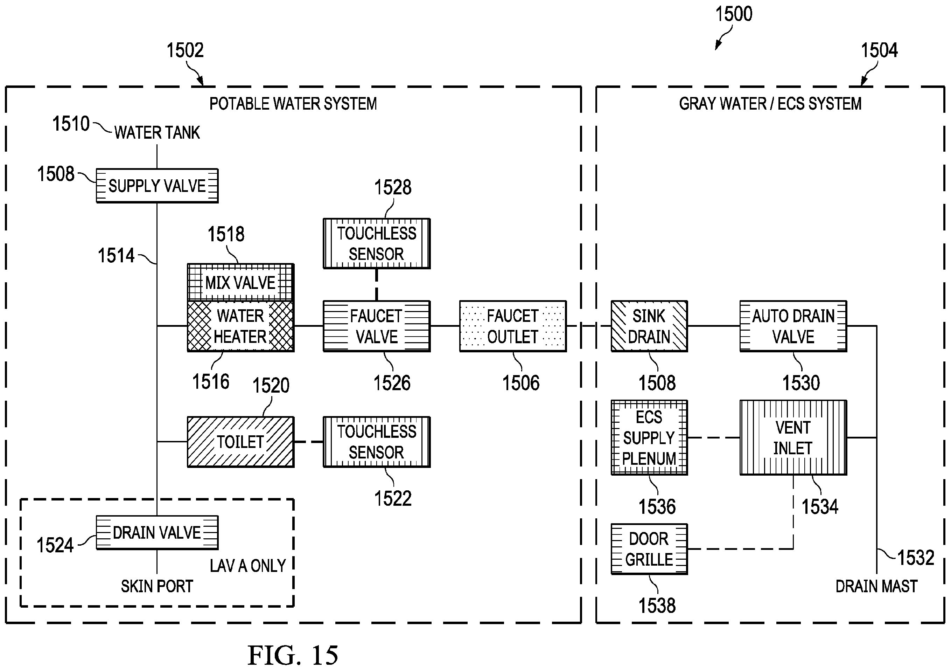

**Figure 15** is an illustration of a block diagram of a water system for an aircraft modular lavatory monument in accordance with an example. Water system **1500** includes various components for controlling the flow of water into and out of an aircraft modular lavatory monument, such as that shown in **Figure 1****.** Water system **1500** includes various components for controlling the flow of water into and out of lavatory monument **1704** of **Figure 17****.**

Water system **1500** may have two almost entirely separate sub-systems, specifically potable water system **1502** and gray water system **1504.** These two systems do not interact, except that faucet outlet **1506** (drain) of the potable water system **1502** drains into a common water line with sink drain **1508** of the gray water system **1504.**

Water system **1500** also includes supply valve **1510,** which governs the supply of water from water tank **1512** into water line **1514.** Water line **1514** connects to water heater **1516** via optionally mix valve **1518.** Water line **1514** also connects to toilet **1520,** which is controlled by touchless sensor **1522.** Optionally, water line **1514** may connect to drain valve **1524.**

Water heater **1516** may connect to faucet valve **1526,** which is controlled by touchless sensor **1528.** Faucet valve **1526** empties into faucet outlet **1506** into sink drain **1508** of gray water system **1504.**

As indicated above, gray water system **1504** includes sink drain **1508.** Sink drain **1508** connects to auto drain valve **1530,** which in turn empties into drain mast **1532,** where waste water is stored for disposal by a ground crew during ground maintenance. Optionally, vent inlet **1534** may also empty into drain mast **1532.** Optionally, ECS supply plenum **1536** and door grille **1538** may be connected to vent inlet **1534.**

Other options, styles, and arrangements are also possible. The illustrative examples shown in **Figure 15** are not meant to imply physical or architectural limitations to the manner in which an example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an example.

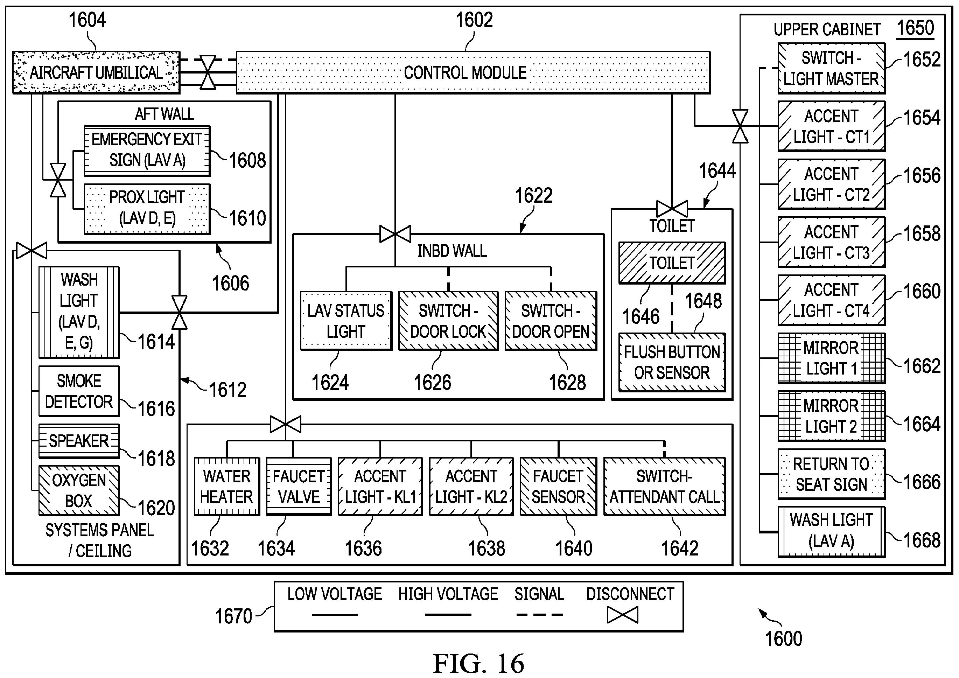

**Figure 16** is an illustration of a block diagram for a control system for an aircraft modular lavatory monument in accordance with an example. Control system **1600** is a variation of the control system described above with respect to **Figure 13** and **Figure 14****.**

Control system **1600** includes control module **1602,** which connects to aircraft electrical umbilical **1604,** as well as the sub-components of control system **1600.** Control module **1602** may be an implementation of control module **1738** of **Figure 17****.** These sub-components are arranged in groups, as shown, so that each group may be easily replaced as a unit.

For example, aft wall sub-component **1606** is connected to both control module **1602** and aircraft electrical umbilical **1604.** Aft wall sub-component **1606** includes emergency exit sign **1608** and possible proximity light **1610.**

In another example, system panel/ ceiling sub-component **1612** is connected to control module **1602** as well as aircraft electrical umbilical **1604.** System panel/ceiling sub-component **1612** includes wash light **1614,** smoke detector **1616,** speaker **1618,** and oxygen box **1620.**

In yet another example, inboard wall sub-component **1622** is connected to control module **1602.** Inboard wall sub-component **1622** includes lavatory status light **1624,** switch-door lock **1626,** and switch - door open **1628.**

In still another example, lower cabinet/backsplash sub-component **1630** is connected to control module **1602.** Lower cabinet/backsplash sub-component **1630** includes water heater **1632,** faucet valve **1634,** accent light **1636,** accent light **1638,** faucet sensor **1640** and switch/attendant call button **1642.**

In another example, toilet sub-component **1644** is connected to control module **1602.** Toilet sub-component **1644** includes toilet **1646** and flush button or sensor **1648.** Thus, via a sensor, toilet **1646** may automatically flush when a user is sensed getting up from the toilet.

In yet another example, upper cabinet sub-component **1650** may be connected to control module **1602.** Upper cabinet sub-component **1650** may include switch-light manager **1652,** accent light **1654,** accent light **1656,** accent light **1658,** accent light **1660,** mirror light **1662,** mirror light **1664,** return to seat sign **1666,** and wash light **1668.**

Legend **1670** is also provided in **Figure 16****.** The different types of lines and disconnects are thus represented as shown in legend **1670.** As used herein, the term "low voltage" refers to less than five volts. The term "high voltage" refers to five volts or greater.

Other options, styles, and arrangements are also possible. Therefore, the illustrative examples shown in **Figure 16** are not meant to imply physical or architectural limitations to the manner in which an example may be implemented.

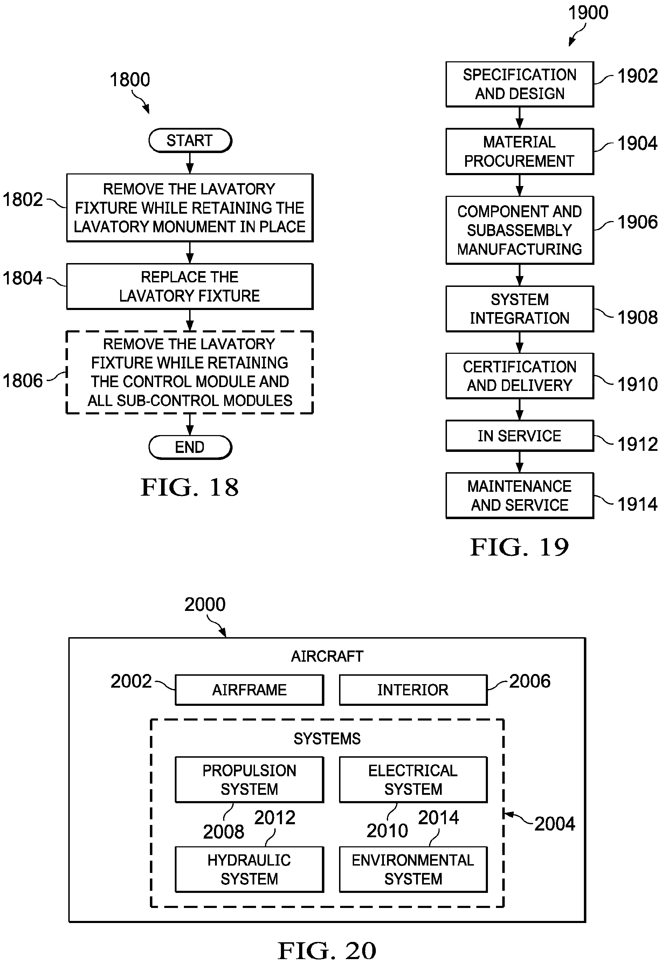

**Figure 17** is an illustration of a block diagram of an aircraft with a modular lavatory monument in accordance with an example. Aircraft **1700** may be, for example, aircraft **2000** of **Figure 20****.**

Aircraft **1700** may include fuselage **1702** and lavatory monument **1704.** Lavatory monument **1704** is removably mounted inside the fuselage **1702.** Lavatory monument **1704** may be referred to as a modular lavatory monument. Lavatory monument **1704** is subject to aircraft regulatory requirements. Thus, lavatory monument **1704** cannot easily import features and designs from bathrooms which were not designed specifically for an aircraft.

Lavatory monument **1704** includes an outboard wall **1706** removably connected to an inside surface of the fuselage **1702.** Lavatory monument **1704** also includes shell wall **1708** removably connected to the outboard wall **1706** and extending radially inwardly relative to the fuselage **1702.**

Lavatory monument **1704** also includes floor panel **1710** connected to and between the outboard wall **1706** and the shell wall **1708.** Floor panel **1710** connects to a floor within fuselage **1702** of aircraft 1700. Lavatory monument 1704 also includes toilet shroud 1712 connected to the floor panel 1710.

Lavatory monument 1704 also includes plurality of lavatory fixtures 1714 individually removably attached to at least one of: the outboard wall 1706, the shell wall 1708, the floor panel 1710, or the toilet shroud 1712. Each of the plurality of lavatory fixtures 1714 is configured to be individually removable. When a lavatory fixture is "individually removable," removal of one lavatory fixture does not require removal of any other of the plurality of lavatory fixtures. Common interface points 1716 on each of the plurality of lavatory fixtures 1714 are unchangeable with respect to the lavatory monument 1704.

Aircraft 1700 may be varied. For example, lavatory monument 1704 may also include ballistic intrusion barrier 1718 connected to the outboard wall **1706** adjacent the ballistic intrusion barrier **1718** and extending radially inwardly relative to the fuselage **1702.** In another example, one of the plurality of lavatory fixtures may be a toilet shroud removably attached to the toilet. In this case, the toilet shroud also connected to the outboard wall.

Other variations are possible. For example, the aircraft may be further modified such that the lavatory monument **1704** includes aft wall **1720** and plurality of non-lavatory fixtures **1722** connected to a second side of aft wall **1720.** The aft wall **1720** is removably attached to outboard wall **1706** opposite shell wall **1708** and extending radially inwardly relative to fuselage **1702.** A first side of aft wall **1720** faces an interior of the lavatory monument **1704.** In an example, plurality of non-lavatory fixtures **1722** may be one or more of the group consisting of: a computer, a display, a cabinet, a drawer, a lock-box, and an instrument panel.

Still other variations are possible. For example, the plurality of lavatory fixtures may include two or more objects selected from the group consisting of: a sink, a faucet, a cabinet, an alcove panel shaped to present an alcove inside the lavatory monument, a toilet paper holder, a drawer, a liquid hose line, a soap dispenser, a soap holder, a towel dispenser, a towel holder, a drawer, a backsplash, a waste receptacle, a counter top, a light strip, a light bulb, a lightable sign, a mirror, a display device, a speaker, a crew signal button, a switch, a panel, a cup holder, an airsick bag dispenser, a tissue dispenser, a sanitary napkin dispenser, a cologne rack, and a shelf.

In a different example, lavatory monument **1704** may include door **1724** connected to shell wall **1708.** Door **1724** may be one of a folding door and a slab door. Door **1724** may also include a lock **1726** which, when actuated, activates all of: locking the door, activating a no-vacancy sign displayed outside the door, and a lighting scenery scheme.

In another example, lavatory monument **1704** may include floor pan **1728** removably connected to floor panel **1710** of the lavatory monument in front of the toilet. In still another example, one or more of the plurality of lavatory fixtures **1714** comprises a plurality of sub-assemblies that are removably connected to a given lavatory fixture such that removal and replacement of one of the plurality of sub-assemblies does not require removal of any other of the plurality of sub-assemblies. A sub-assembly comprises any desirable set of lavatory fixtures. In one illustrative example, a sub-assembly comprises a backsplash, a faucet, and a liquid hose line. In this illustrative example, the sub-assembly may be installed and removed from the lavatory without removing any other sub-assemblies.

In still another example, aircraft **1700** also includes electrical wiring system **1730.** In this case, each of the plurality of lavatory fixtures **1714** that require electricity is removably connected to the electrical wiring system **1730.** In this case, aircraft **1700** may also include computer **1732.** In this case, the lavatory monument **1704** is removably connectable to the computer **1732** and the computer **1732** is configured to control one or both of: electrical fixtures or display fixtures in the lavatory monument **1704.**

In yet another example, aircraft **1700** may include air duct system **1734.** In this case lavatory monument **1704** has an air duct that is removably connectable to the air duct system **1734.**

In an example, the plurality of lavatory fixtures **1714** includes a faucet, a fluid line, a sink, a drain, and a backsplash, wherein the faucet is removably connected to the fluid line, the fluid line is removably connected to the backsplash, the sink is removably connected to the shell wall, and the drain is removably connected to the sink. In another example, the plurality of lavatory fixtures **1714** further includes lighting **1736** removably disposed underneath a counter at about foot level.

In still another example, lavatory monument may include further features. For example, lavatory monument **1704** may include control module **1738** connectable to an aircraft electrical umbilical. In this case, control module **1738** may be removably connected to all or some of a variety of sub-components. The sub-components may include an upper cabinet sub-component; an inboard wall sub-component; a toilet sub-component; a lower cabinet and backsplash sub-component; a systems panel and ceiling sub-component; and an aft wall sub-component. In an example, the aircraft electrical umbilical is also removably connectable to the aft wall sub-component and the systems panel and ceiling sub-component.

Other options, styles, and arrangements are also possible. The illustration of aircraft **1700** in **Figure 17** is not meant to imply physical or architectural limitations to the manner in which an example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an example.

For example, each of outboard wall **1706,** shell wall **1708,** and aft wall **1720** has common interface points. In some illustrative examples, aft wall **1720** has common interface points that do not change with different options for aft wall **1720.** Additionally, each of plurality of non-lavatory fixtures **1722** has common interface points. The common interface points on each of plurality of non-lavatory fixtures **1722** provides for ease of removal and replacement of sub-assemblies connected to aft wall **1720.**

**Figure 18** is an illustration of a flowchart of a method for replacing a fixture in an aircraft modular lavatory monument in accordance with an example. Method **1800** may be implemented in an aircraft, such as aircraft **1700** of **Figure 17** and aircraft **2000** of **Figure 20****.** Method **1800** may be characterized as a method of replacing a fixture in a lavatory monument of an aircraft while retaining the lavatory monument in place.

As indicated, method **1800** may be implemented in aircraft **1700** of **Figure 17****.** Thus, method **1800** may be implemented an aircraft including: a fuselage; a lavatory monument removably mounted inside the fuselage, wherein the lavatory monument further comprises: an outboard wall removably connected to an inside surface of the fuselage; a shell wall removably connected to the outboard wall and extending radially inwardly relative to the fuselage; a floor panel connected to and between the outboard wall and the shell wall; a toilet connected to the floor panel; and a plurality of lavatory fixtures individually removably attached to at least one of: the outboard wall, the shell wall, the floor panel, or the toilet, wherein each of the plurality of lavatory fixtures are configured to be individually removable, and wherein the lavatory fixture is one of the plurality of lavatory fixtures, and wherein common interface points on each of the plurality of lavatory fixtures are unchangeable with respect to the lavatory monument.

Method **1800** includes removing the lavatory fixture while retaining the lavatory monument in place (operation **1802).** Method **1800** also includes replacing the lavatory fixture (operation **1804).** In one example, the method may terminate thereafter.

Method **1800** may be varied. For example, assume that the lavatory monument further includes: a control module connectable to an aircraft electrical umbilical, the control module removably connected to all of: an upper cabinet sub-component; an inboard wall sub-component; a toilet sub-component; a lower cabinet and backsplash sub-component; a systems panel and ceiling sub-component; and an aft wall sub-component. In this case, method **1800** may also include removing the lavatory fixture while retaining the control module and all sub-components (operation **1806).** In one example, the method may terminate thereafter.

Still other variations are possible. More or fewer operations may be present, or different operations may be present. The flowcharts and block diagrams in the different depicted embodiments illustrate the architecture, functionality, and operation of some possible implementations of apparatus and methods in an example. In this regard, each block in the flowcharts or block diagrams may represent a module, a segment, a function, and/or a portion of an operation or step.

In some alternative implementations of an example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added, in addition to the illustrated blocks, in a flowchart or block diagram. In some illustrative examples, not all blocks are performed and some blocks may be optional, in a flowchart or block diagram.

**Figure 19** is an illustration of an aircraft manufacturing and service method in the form of a block diagram depicted in accordance with an example. **Figure 20** is an illustration of an aircraft in the form of a block diagram depicted in accordance with an example.

Examples of the disclosure may be described in the context of aircraft manufacturing and service method **1900** as shown in **Figure 19** and aircraft **2000** as shown in **Figure 20****.** Turning first to **Figure 19****,** an illustration of an aircraft manufacturing and service method is depicted in accordance with an example. During pre-production, aircraft manufacturing and service method **1900** may include specification and design **1902** of aircraft **2000** in **Figure 20** and material procurement **1904.**

During production, component and subassembly manufacturing **1906** and system integration **1908** of aircraft **2000** in **Figure 20** takes place. Thereafter, aircraft **2000** in **Figure 20** may go through certification and delivery **1910** in order to be placed in service **1912.** While in service **1912** by a customer, aircraft **2000** in **Figure 20** is scheduled for routine maintenance and service **1914,** which may include modification, reconfiguration, refurbishment, and other maintenance or service.

Each of the processes of aircraft manufacturing and service method **1900** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 20****,** an illustration of an aircraft is depicted in which an example may be implemented. In this example, aircraft **2000** is produced by aircraft manufacturing and service method **1900** in **Figure 19** and may include airframe **2002** with plurality of systems **2004** and interior **2006.** Examples of systems **2004** include one or more of propulsion system **2008,** electrical system **2010,** hydraulic system **2012,** and environmental system **2014.** Any number of other systems may be included. Although an aerospace example is shown, different examples may be applied to other industries, such as the automotive industry.

Apparatuses and methods embodied herein may be employed during at least one of the stages of aircraft manufacturing and service method **1900** in **Figure 19****.** One or more apparatus embodiments, method embodiments, or a combination thereof may be utilized during production stages, such as component and subassembly manufacturing **1906** and system integration **1908** in **Figure 19****.** In one illustrative example, components or subassemblies of an aircraft modular lavatory monument, such as lavatory monument **1704,** may be produced and assembled in component and subassembly manufacturing **1906** in **Figure 19****.**

One or more apparatus embodiments, method embodiments, or a combination thereof may be utilized while aircraft **2000** is in service **1912** and/or during maintenance and service **1914** in **Figure 19****.** For example, assemblies or sub-assemblies of an aircraft modular lavatory monument, such as lavatory monument **1704,** may be at least one of removed or replaced during maintenance and service **1914** in **Figure 19****.** The use of a number of the different examples may substantially expedite the assembly of and/or reduce the cost of aircraft **2000.**

## Claims

1. An aircraft (1700) comprising:
a fuselage (1702);
a lavatory monument (1704) removably mounted inside the fuselage (1702), wherein the lavatory monument (1704) further comprises:
an outboard wall (1706) removably connected to an inside surface of the fuselage (1702);
a ballistic intrusion barrier (1718) removably connected to the outboard wall (1706) and extending radially inwardly relative to the fuselage (1702);
a floor panel (1710) connected to and between the outboard wall (1706) and the ballistic intrusion barrier (1718);
a toilet (112) connected to the floor panel (1710); and
a plurality of lavatory fixtures (1714) individually removably attached to at least one of:
the outboard wall (1706), the ballistic intrusion barrier (1718), the floor panel (1710), or the toilet (112), wherein each of the plurality of lavatory fixtures (1714) are configured to be individually removable , and wherein common interface points (1716) on each of the plurality of lavatory fixtures (1714) are unchangeable with respect to the lavatory monument (1704).

2. The aircraft (1700) of claim 1, wherein one of the plurality of lavatory fixtures (1714) comprises a toilet shroud (114, 1712) removably attached to the toilet (112), the toilet shroud (114, 1712) also connected to the outboard wall (1706).

3. The aircraft (1700) of one of claims 1-2, further comprising:
an aft wall (1720) removably attached to the outboard wall (1706) opposite the ballistic intrusion barrier (1718) and extending radially inwardly relative to the fuselage (1702); and
a plurality of non-lavatory fixtures (1722) connected to a second side of the aft wall (1720), wherein a first side of the aft wall (1720) faces an interior of the lavatory monument (1704), and wherein the plurality of non-lavatory fixtures (1722) comprises one or more of the group consisting of: a computer, a display, a cabinet, a drawer, a lock-box, and an instrument panel.

4. The aircraft (1700) of any one of claims 1-3, wherein the plurality of lavatory fixtures (1714) comprises two or more objects selected from the group consisting of: a sink, a faucet, a cabinet, an alcove panel shaped to present an alcove inside the lavatory monument (1704), a toilet paper holder, a drawer, a liquid hose line, a soap dispenser, a soap holder, a towel dispenser, a towel holder, a drawer, a backsplash, a waste receptacle, a counter top, a light strip, a light bulb, a lightable sign, a mirror, a display device, a speaker, a crew signal button, a switch, a panel, a cup holder, an airsick bag dispenser, a tissue dispenser, a sanitary napkin dispenser, a cologne rack, and a shelf.

5. The aircraft (1700) of any preceding claim, wherein the lavatory monument (1704) further comprises a door (1724) connected to the ballistic intrusion barrier (1718).

6. The aircraft (1700) of claim 5, wherein the door (1724) further comprises one or more of:
a folding door;
a slab door; and
a lock (1726) which, when actuated, activates all of: locking the door (1724), activating a no-vacancy sign displayed outside the door (1724), and a lighting scenery scheme.

7. The aircraft (1700) of any one of claims 1-6, wherein the lavatory monument (1704) further comprises:
a floor pan (1728) removably connected to the floor panel (1710) of the lavatory monument (1704) in front of the toilet (112) .

8. The aircraft (1700) of any one of claims 1-7, wherein one or more of the plurality of lavatory fixtures (1714) comprises a plurality of sub-assemblies that are removably connected to a given lavatory fixture such that removal and replacement of one of the plurality of sub-assemblies does not require removal of any other of the plurality of sub-assemblies.

9. The aircraft (1700) of any one of claims 1-8, wherein the aircraft (1700) further comprises:
an electrical wiring system (1730), wherein each of the plurality of lavatory fixtures (1714) that require electricity is removably connected to the electrical wiring system (1730); and optionally further comprises:
a computer (1732), wherein the lavatory monument (1704) is removably connectable to the computer (1732) and the computer (1732) is configured to control one or both of: electrical fixtures or display fixtures in the lavatory monument (1704).

10. The aircraft (1700) of any one of claims 1-9, wherein the aircraft (1700) further comprises:
an air duct system (1734), wherein the lavatory monument (1704) has an air duct that is removably connectable to the air duct system (1734).

11. The aircraft (1700) of any one of claims 1-10, wherein the plurality of lavatory fixtures (1714) comprises a faucet, a fluid line, a sink, a drain, and a backsplash, wherein the faucet is removably connected to the fluid line, the fluid line is removably connected to the backsplash, the sink is removably connected to the ballistic intrusion barrier (1718), and the drain is removably connected to the sink.

12. The aircraft (1700) of any one of claims 1-11, wherein the plurality of lavatory fixtures (1714) further comprises:
lighting (1308) removably disposed underneath a counter at about foot level.

13. The aircraft (1700) of any one of claims 1-12, wherein the lavatory monument (1704) further comprises:
a control module (1738) connectable to an aircraft (1700) electrical umbilical, the control module (1738) removably connected to all of:
an upper cabinet sub-component (1650);
an inboard wall sub-component (1622);
a toilet sub-component (1644);
a lower cabinet and backsplash sub-component (1630);
a systems panel and ceiling sub-component (1612); and
an aft wall sub-component (1606), wherein the aircraft electrical umbilical is also removably connectable to the aft wall sub-component (1606) and the systems panel and ceiling sub-component (1612).

14. A method (1800) of replacing a lavatory fixture in a lavatory monument (1704) of an aircraft (1700) while retaining the lavatory monument (1704) in place, the method implemented in an aircraft (1700) comprising: a fuselage (1702); a lavatory monument (1704) removably mounted inside the fuselage (1702), wherein the lavatory monument (1704) further comprises: an outboard wall (1706) removably connected to an inside surface of the fuselage (1702); a ballistic intrusion barrier (1718) removably connected to the outboard wall (1706) and extending radially inwardly relative to the fuselage (1702); a floor panel (1710) connected to and between the outboard wall (1706) and the ballistic intrusion barrier (1718); a toilet connected to the floor panel (1710); and a plurality of lavatory fixtures (1714) individually removably attached to at least one of: the outboard wall (1706), the ballistic intrusion barrier (1718), the floor panel (1710), or the toilet, wherein each of the plurality of lavatory fixtures (1714) is configured to be individually removable, wherein the lavatory fixture is one of the plurality of lavatory fixtures (1714), and wherein common interface points (1716) on each of the plurality of lavatory fixtures (1714) are unchangeable with respect to the lavatory monument (1704), the method comprising:
removing (1802) the lavatory fixture while retaining the lavatory monument (1704) in place; and
replacing (1804) the lavatory fixture.

15. The method (1800) of claim 14, wherein the lavatory monument (1704) further comprises: a control module (1738) connectable to an aircraft electrical umbilical, the control module (1738) removably connected to all of: an upper cabinet sub-component (1650); an inboard wall sub-component (1622); a toilet sub-component (1644); a lower cabinet and backsplash sub-component (1630); a systems panel and ceiling sub-component (1612); and an aft wall sub-component (1606), and wherein the method further comprises:
removing (1806) the lavatory fixture while retaining the control module (1738) and all sub-components.

## Patentansprüche

1. Flugzeug (1700), das aufweist:
einen Rumpf (1702);
ein Toilettenabteil (1704), das entfernbar in dem Rumpf (1702) angebracht ist, wobei das Toilettenabteil (1704) des Weiteren aufweist:
eine Außenbordwand (1706), die entfernbar mit einer Innenfläche des Rumpfs (1702) verbunden ist;
eine ballistische Eindringbarriere (1718), die entfernbar mit der Außenbordwand (1706) verbunden ist und sich in Bezug zu dem Rumpf (1702) radial nach innen erstreckt;
eine Bodenplatte (1710), die mit und zwischen der Außenbordwand (1706) und der ballistischen Eindringbarriere (1718) verbunden ist;
eine Toilette (112), die mit der Bodenplatte (1710) verbunden ist; und
eine Vielzahl von Toilettenzubehörteilen (1714), die einzeln entfernbar an wenigstens einem befestigt sind von: der Außenbordwand (1706), der ballistischen Eindringbarriere (1718), der Bodenplatte (1710) oder der Toilette (112), wobei jedes der Vielzahl von Toilettenzubehörteilen (1714) dazu konfiguriert ist, einzeln entfernbar zu sein, und wobei gemeinsame Schnittstellenpunkte (1716) an jedem der Vielzahl von Toilettenzubehörteilen (1714) bezüglich des Toilettenabteils (1704) unveränderbar sind.

2. Flugzeug (1700) nach Anspruch 1, wobei eines der Vielzahl von Toilettenzubehörteilen (1714) eine Toilettenummantelung (114, 1712) aufweist, die entfernbar an der Toilette (112) befestigt ist, wobei die Toilettenummantelung (114, 1712) auch mit der Außenbordwand (1706) verbunden ist.

3. Flugzeug (1700) nach einem der Ansprüche 1-2, das des Weiteren aufweist:
eine Rückwand (1720), die entfernbar an der Außenbordwand (1706) gegenüber der ballistischen Eindringbarriere (1718) befestigt ist und sich in Bezug zu dem Rumpf (1702) radial nach innen erstreckt; und
eine Vielzahl von Nicht-Toilettenzubehörteilen (1722), die mit einer zweiten Seite der Rückwand (1720) verbunden sind, wobei eine erste Seite der Rückwand (1720) einem Innenraum des Toilettenabteils (1704) zugewandt ist, und wobei die Vielzahl von Nicht-Toilettenzubehörteilen (1722) eines oder mehrere aufweisen von der Gruppe bestehend aus: einem Rechner, einem Display, einem Gehäuse, einem Auszug, einer Schließkassette und einer Instrumententafel.

4. Flugzeug (1700) nach einem der Ansprüche 1-3, wobei die Vielzahl von Toilettenzubehörteilen (1714) zwei oder mehr Gegenstände aufweisen, die ausgewählt werden aus der Gruppe bestehend aus: einem Waschbecken, einer Armatur, einem Gehäuse, einer Nischenplatte, die dazu geformt ist, eine Nische in dem Toilettenabteil (1704) darzustellen, einem Toilettenpapierhalter, einem Auszug, einer Flüssigkeitsschlauchleitung, einem Seifenspender, einem Seifenhalter, einem Handtuchspender, einem Handtuchhalter, einem Auszug, einem Fliesenspiegel, einem Abfallbehälter, einer Waschtischplatte, einem Leuchtstreifen, einer Glühbirne, einem Beleuchtungszeichen, einem Spiegel, einer Anzeigevorrichtung, einem Lautsprecher, einem Flugpersonal-Signalknopf, einem Schalter, einem Panel, einem Becherhalter, einem Spuckbeutelspender, einem Taschentuchspender, einem Hygienebindenspender, einem Parfumhalter und einem Ablagefach.

5. Flugzeug (1700) nach einem der vorhergehenden Ansprüche, wobei das Toilettenabteil (1704) des Weiteren eine Tür (1724) aufweist, die mit der ballistischen Eindringbarriere (1718) verbunden ist.

6. Flugzeug (1700) nach Anspruch 5, wobei die Tür (1724) des Weiteren eines oder mehrere aufweist von:
einer Falttür;
einer Plattentür; und
einer Verriegelung (1726), die, wenn sie betätigt wird, alles auslöst von: Verriegeln der Tür (1724), Aktivieren eines Besetztzeichens, das außen an der Tür (1724) angezeigt wird, und einem Beleuchtungsszenenschema.

7. Flugzeug (1700) nach einem der Ansprüche 1-6, wobei das Toilettenabteil (1704) des Weiteren aufweist:
eine Bodenwanne (1728), die entfernbar mit der Bodenplatte (1710) des Toilettenabteils (1704) vor der Toilette (112) verbunden ist.

8. Flugzeug (1700) nach einem der Ansprüche 1-7, wobei eines oder mehrere der Vielzahl von Toilettenzubehörteilen (1714) eine Vielzahl von Unteranordnungen aufweisen, die entfernbar mit einem gegebenen Toilettenzubehörteil derart verbunden sind, dass ein Entfernen und Ersetzen einer der Vielzahl von Unteranordnungen nicht das Entfernen irgendeiner anderen der Vielzahl von Unteranordnungen erforderlich macht.

9. Flugzeug (1700) nach einem der Ansprüche 1-8, wobei das Flugzeug (1700) des Weiteren aufweist:
ein elektrisches Verdrahtungssystem (1730), wobei jedes der Vielzahl von Toilettenzubehörteilen (1714), das Strom benötigt, entfernbar mit dem elektrischen Verdrahtungssystem (1730) verbunden ist; und optional des Weiteren aufweist:
einen Rechner (1732), wobei das Toilettenabteil (1704) entfernbar mit dem Rechner (1732) verbindbar ist, und der Rechner (1732) dazu konfiguriert ist, eines oder beide zu steuern von: elektrischen Zubehörteilen oder Anzeige-Zubehörteilen in dem Toilettenabteil (1704).

10. Flugzeug (1700) nach einem der Ansprüche 1-9, wobei das Flugzeug (1700) des Weiteren aufweist:
ein Luftkanalsystem (1734), wobei das Toilettenabteil (1704) einen Luftkanal hat, der entfernbar mit dem Luftkanalsystem (1734) verbindbar ist.

11. Flugzeug (1700) nach einem der Ansprüche 1-10, wobei die Vielzahl von Toilettenzubehörteilen (1714) eine Armatur, eine Flüssigkeitsleitung, ein Waschbecken, einen Abfluss und einen Fliesenspiegel aufweisen, wobei die Armatur entfernbar mit der Flüssigkeitsleitung verbunden ist, die Flüssigkeitsleitung entfernbar mit dem Fliesenspiegel verbunden ist, das Waschbecken entfernbar mit der ballistischen Eindringbarriere (1718) verbunden ist, und der Abfluss entfernbar mit dem Waschbecken verbunden ist.

12. Flugzeug (1700) nach einem der Ansprüche 1-11, wobei die Vielzahl von Toilettenzubehörteilen (1714) des Weiteren aufweisen:
Beleuchtung (1308), die entfernbar unterhalb eines Waschtischs ungefähr auf Fußebene angeordnet ist.

13. Flugzeug (1700) nach einem der Ansprüche 1-12, wobei das Toilettenabteil (1704) des Weiteren aufweist:
ein Steuermodul (1738), das mit einem elektrischen Versorgungsschlauch des Flugzeugs (1700) verbindbar ist, wobei das Steuermodul (1738) entfernbar mit allen verbunden ist von:
einer oberen Abteil-Unterkomponente (1650);
einer Innenbordwand-Unterkomponente (1622);
einer Toiletten-Unterkomponente (1644);
einer unteren Abteil- und Fliesenspiegel-Unterkomponente (1630);
einer Systempanel- und Decken-Unterkomponente (1612); und
einer Rückwand-Unterkomponente (1606), wobei der elektrische Versorgungsschlauch des Flugzeugs auch entfernbar mit der Rückwand-Unterkomponente (1606) und der Systempanel- und Decken-Unterkomponente (1612) verbindbar ist.

14. Verfahren (1800) zum Ersetzen eines Toilettenzubehörteils in einem Toilettenabteil (1704) eines Flugzeugs (1700), während das Toilettenabteil (1704) an Ort und Stelle gehalten wird, wobei das Verfahren in einem Flugzeug (1700) implementiert wird, das aufweist: einen Rumpf (1702); ein Toilettenabteil (1704), das entfernbar im Inneren des Rumpfs (1702) angebracht ist, wobei das Toilettenabteil (1704) des Weiteren aufweist: eine Außenbordwand (1706), die entfernbar mit einer Innenfläche des Rumpfs (1702) verbunden ist; eine ballistische Eindringbarriere (1718), die entfernbar mit der Außenbordwand (1706) verbunden ist und sich in Bezug zu dem Rumpf (1702) radial nach innen erstreckt; eine Bodenplatte (1710), die mit und zwischen der Außenbordwand (1706) und der ballistischen Eindringbarriere (1718) verbunden ist; eine Toilette, die mit der Bodenplatte (1710) verbunden ist; und eine Vielzahl von Toilettenzubehörteilen (1714), die einzeln entfernbar an wenigstens einem befestigt sind von: der Außenbordwand (1706), der ballistischen Eindringbarriere (1718), der Bodenplatte (1710) oder der Toilette, wobei jedes der Vielzahl von Toilettenzubehörteilen (1714) dazu konfiguriert ist, einzeln entfernbar zu sein, wobei das Toilettenzubehörteil eines der Vielzahl von Toilettenzubehörteilen (1714) ist, und wobei gemeinsame Schnittstellenpunkte (1716) an jedem der Vielzahl von Toilettenzubehörteilen (1714) bezüglich des Toilettenabteils (1704) unveränderbar sind, wobei das Verfahren aufweist:
Entfernen (1802) des Toilettenzubehörteils, während das Toilettenabteil (1704) an Ort und Stelle gehalten wird; und
Ersetzen (1804) des Toilettenzubehörteils.

15. Verfahren (1800) nach Anspruch 14, wobei das Toilettenabteil (1704) des Weiteren aufweist: ein Steuermodul (1738), das mit einem elektrischen Versorgungsschlauch des Flugzeugs verbindbar ist, wobei das Steuermodul (1738) entfernbar verbunden ist mit allen von: einer oberen Abteil-Unterkomponente (1650); einer Innenbordwand-Unterkomponente (1622); einer Toiletten-Unterkomponente (1644); einer unteren Abteil- und Fliesenspiegel-Unterkomponente (1630); einer Systempanel- und Decken-Unterkomponente (1612); und einer Rückwand-Unterkomponente (1606), und wobei das Verfahren des Weiteren aufweist:
Entfernen (1806) des Toilettenzubehörteils, während das Steuermodul (1738) und alle Unterkomponenten beibehalten werden.

## Revendications

1. Avion (1700) comprenant :
un fuselage (1702) ;
une structure d'ensemble (1704) des toilettes, ladite structure d'ensemble étant montée de façon amovible à l'intérieur du fuselage (1702), avion dans lequel la structure d'ensemble (1704) des toilettes comprend en outre :
une paroi extérieure (1706) reliée de façon amovible à une surface intérieure du fuselage (1702) ;
une barrière anti-intrusion balistique (1718) reliée de façon amovible à la paroi extérieure (1706) et s'étendant radialement vers l'intérieur par rapport au fuselage (1702) ;
un panneau de sol (1710) relié à et entre la paroi extérieure (1706) et la barrière anti-intrusion balistique (1718) ;
une cuvette de WC (112) reliée au panneau de sol (1710) ; et
une pluralité de composants sanitaires (1714) fixés individuellement de façon amovible à au moins l'un ou l'une de la paroi extérieure (1706), de la barrière anti-intrusion balistique (1718), du panneau de sol (1710) ou de la cuvette de WC (112), structure d'ensemble dans laquelle chaque composant parmi la pluralité de composants sanitaires (1714) est configuré pour être individuellement amovible, et structure d'ensemble dans laquelle des points d'interface communs (1716) sur chaque composant parmi la pluralité de composants sanitaires (1714) sont interchangeables par rapport à la structure d'ensemble (1704) des toilettes.

2. Avion (1700) selon la revendication 1, dans lequel un composant parmi la pluralité de composants sanitaires (1714) comprend un carénage (114, 1712) de la cuvette de WC, ledit carénage étant fixé de façon amovible à la cuvette de WC (112), le carénage (114, 1712) de la cuvette de WC étant relié également à la paroi extérieure (1706).

3. Avion (1700) selon l'une des revendications 1 ou 2, comprenant en outre :
une paroi arrière (1720) fixée de façon amovible à la paroi extérieure (1706) opposée à la barrière anti-intrusion balistique (1718) et s'étendant radialement vers l'intérieur par rapport au fuselage (1702) ; et
une pluralité de composants non sanitaires (1722) reliés à un second côté de la paroi arrière (1720), avion dans lequel un premier côté de la paroi arrière (1720) fait face à un intérieur de la structure d'ensemble (1704) des toilettes, et avion dans lequel la pluralité de composants non sanitaires (1722) comprend un ou plusieurs éléments du groupe se composant : d'un ordinateur, d'un dispositif d'affichage, d'un meuble, d'un tiroir, d'un coffre-fort et d'un tableau de commande.

4. Avion (1700) selon l'une quelconque des revendications 1 à 3, dans lequel la pluralité de composants sanitaires (1714) comprend deux objets ou plus sélectionnés parmi le groupe se composant : d'un lavabo, d'un robinet, d'un meuble, d'un panneau d'alcôve façonné pour présenter une alcôve à l'intérieur de la structure d'ensemble (1704) des toilettes, un porte-rouleau de papier toilette, un tiroir, une conduite souple de liquide, un distributeur de savon, un porte-savon, un porte-serviettes, un tiroir, un dosseret, une poubelle, un dessus de comptoir, une rampe lumineuse, une ampoule électrique, une enseigne éclairable, un miroir, un dispositif d'affichage, un haut-parleur, un bouton de signal d'équipage, un interrupteur, un panneau, un porte-gobelet, un distributeur de sacs contre le mal de l'air, un distributeur de mouchoirs, un distributeur de serviettes hygiéniques, un présentoir d'eau de Cologne et une étagère.

5. Avion (1700) selon l'une quelconque des revendications précédentes, dans lequel la structure d'ensemble (1704) des toilettes comprend en outre une porte (1724) reliée à la barrière anti-intrusion balistique (1718).

6. Avion (1700) selon la revendication 5, dans lequel la porte (1724) comprend en outre l'un ou l'une ou plusieurs :
d'une porte pliante ;
d'une porte en dalle ; et
d'un verrou (1726) qui, lorsqu'il est actionné, active tout ce qui concerne : le verrouillage de la porte (1724), l'activation du voyant d'occupation affiché à l'extérieur de la porte (1724) et un système d'éclairage d'ambiance.

7. Avion (1700) selon l'une quelconque des revendications 1 à 6, dans lequel la structure d'ensemble (1704) des toilettes comprend en outre :
un bac de plancher (1728) relié de façon amovible au panneau de sol (1710) de la structure d'ensemble (1704) des toilettes devant la cuvette de WC (112).

8. Avion (1700) selon l'une quelconque des revendications 1 à 7, dans lequel un ou plusieurs composants parmi la pluralité de composants sanitaires (1714) comprend ou comprennent une pluralité de sous-ensembles qui sont reliés de façon amovible à un composant sanitaire donné, de manière telle que le fait de retirer et de remplacer un sous-ensemble parmi la pluralité de sous-ensembles ne nécessite le retrait d'aucun autre sous-ensemble parmi la pluralité de sous-ensembles.

9. Avion (1700) selon l'une quelconque des revendications 1 à 8, où l'avion (1700) comprend en outre :
un système de câblage électrique (1730) dans lequel chaque composant parmi la pluralité de composants sanitaires (1714) nécessitant de l'électricité est connecté de façon amovible au système de câblage électrique (1730) ; et, éventuellement, ledit avion comprend en outre :
un ordinateur (1732) où la structure d'ensemble (1704) des toilettes peut être connectée de façon amovible à l'ordinateur (1732), et l'ordinateur (1732) est configuré pour commander dans la structure d'ensemble (1704) des toilettes, soit les composants électriques ou les composants d'affichage, soit les deux types de composants.

10. Avion (1700) selon l'une quelconque des revendications 1 à 9, où l'avion (1700) comprend en outre :
un système de conduits d'air (1734) dans lequel la structure d'ensemble (1704) des toilettes a un conduit d'air qui peut être relié de façon amovible au système de conduits d'air (1734).

11. Avion (1700) selon l'une quelconque des revendications 1 à 10, dans lequel la pluralité de composants sanitaires (1714) comprend un robinet, une conduite de fluide, un lavabo, une évacuation et un dosseret, avion dans lequel le robinet est relié de façon amovible à la conduite de fluide, la conduite de fluide est reliée de façon amovible au dosseret, le lavabo est relié de façon amovible à la barrière anti-intrusion balistique (1718), et l'évacuation est reliée de façon amovible au lavabo.

12. Avion (1700) selon l'une quelconque des revendications 1 à 11, dans lequel la pluralité de composants sanitaires (1714) comprend en outre :
un éclairage (1308) disposé de façon amovible sous un comptoir à peu près au niveau des pieds.

13. Avion (1700) selon l'une quelconque des revendications 1 à 12, dans lequel la structure d'ensemble (1704) des toilettes comprend en outre :
un module de commande (1738) pouvant être connecté à une prise ombilicale électrique de l'avion (1700), le module de commande (1738) étant connecté de façon amovible à chacun de tous les sous-composants suivants :
un sous-composant (1650) du meuble supérieur ;
un sous-composant (1622) de la paroi intérieure ;
un sous-composant (1644) de la cuvette de WC ;
un sous-composant (1630) du meuble inférieur et du dosseret ;
un sous-composant (1612) du panneau de systèmes et du plafond ; et
un sous-composant (1606) de la paroi arrière, structure d'ensemble dans laquelle la prise ombilicale électrique de l'avion peut être connectée également au sous-composant (1606) de la paroi arrière et au sous-composant (1612) du panneau de systèmes et du plafond.

14. Procédé (1800) de remplacement d'un composant sanitaire dans une structure d'ensemble (1704) des toilettes d'un avion (1700), tout en maintenant en place la structure d'ensemble (1704) des toilettes, le procédé étant mis en œuvre dans un avion (1700) comprenant : un fuselage (1702) ; une structure d'ensemble (1704) des toilettes, ladite structure d'ensemble étant montée de façon amovible à l'intérieur du fuselage (1702), avion dans lequel la structure d'ensemble (1704) des toilettes comprend en outre : une paroi extérieure (1706) reliée de façon amovible à une surface intérieure du fuselage (1702) ; une barrière anti-intrusion balistique (1718) reliée de façon amovible à la paroi extérieure (1706) et s'étendant radialement vers l'intérieur par rapport au fuselage (1702) ; un panneau de sol (1710) relié à et entre la paroi extérieure (1706) et la barrière anti-intrusion balistique (1718) ; une cuvette de WC reliée au panneau de sol (1710) ; et une pluralité de composants sanitaires (1714) fixés individuellement de façon amovible à au moins l'un ou l'une : de la paroi extérieure (1706), de la barrière anti-intrusion balistique (1718), du panneau de sol (1710) ou de la cuvette de WC, structure d'ensemble dans laquelle chaque composant parmi la pluralité de composants sanitaires (1714) est configuré pour être individuellement amovible, structure d'ensemble dans laquelle le composant sanitaire est l'un de ceux parmi la pluralité de composants sanitaires (1714) et structure d'ensemble dans laquelle des points d'interface communs (1716) sur chaque composant parmi la pluralité de composants sanitaires (1714) sont interchangeables par rapport à la structure d'ensemble (1704) des toilettes, le procédé comprenant :
le retrait (1802) du composant sanitaire tout en maintenant en place la structure d'ensemble (1704) des toilettes ; et
le remplacement (1804) du composant sanitaire.

15. Procédé (1800) selon la revendication 14, dans lequel la structure d'ensemble (1704) des toilettes comprend en outre : un module de commande (1738) pouvant être connecté à une prise ombilicale électrique de l'avion, le module de commande (1738) étant connecté de façon amovible à chacun de tous les sous-composants suivants : un sous-composant (1650) du meuble supérieur ; un sous-composant (1622) de la paroi intérieure ; un sous-composant (1644) de la cuvette de WC ; un sous-composant (1630) du meuble inférieur et du dosseret ; un sous-composant (1612) du panneau de systèmes et du plafond ; et un sous-composant (1606) de la paroi arrière, et où le procédé comprend en outre :
le retrait (1806) du composant sanitaire tout en maintenant en place le module de commande (1738) et tous les sous-composants.
